# EUROPÄISCHE PATENTSCHRIFT

(11) **EP 3 982 349 B1**
(45) Veröffentlichungstag und Bekanntmachung des Hinweises auf die Patenterteilung: **03.04.2024**
(21) Anmeldenummer: 21200526.8
(22) Anmeldetag: 01.10.2021
(51) Int. Cl.: G08G 5/00, G08G 5/04

(54) **FLUGGERÄT SOWIE VERFAHREN UND RECHNERGESTÜTZTES SYSTEM ZUR STEUERUNG EINES FLUGGERÄTS**
FLIGHT DEVICE AND METHOD AND COMPUTER AIDED SYSTEM FOR CONTROLLING AN AIRCRAFT
AÉRONEF, AINSI QUE PROCÉDÉ ET SYSTÈME ASSISTÉ PAR ORDINATEUR DE COMMANDE D'UN AÉRONEF

(30) Priorität: 12.10.2020 DE 102020126689
(43) Veröffentlichungstag der Anmeldung: 13.04.2022
(73) Patentinhaber: Volocopter GmbH, 76646 Bruchsal (DE)
(72) Erfinder: Ortlieb, Markus, 76227 Karlsruhe (DE)
(74) Vertreter: LBP Lemcke, Brommer & Partner Patentanwälte mbB

(56) Entgegenhaltungen:
- DE-A1-102009 014 978
- DE-A1-102019 103 173

## Beschreibung

Die Erfindung betrifft ein Verfahren zur Steuerung eines Fluggeräts eines bestimmten Typs, insbesondere Multirotor-VTOL-Fluggerät mit vorzugsweise elektrisch angetriebenen Rotoren, gemäß Anspruch 1.

Die Erfindung betrifft auch ein rechnergestütztes System (sog. Bewegungsplaner) gemäß Anspruch 10 zur Steuerung eines Fluggeräts eines bestimmten Typs nach einem erfindungsgemäßen Verfahren.

Vorteilhafte Ausführungsformen sind in den abhängigen Ansprüchen 2-9 und 11-14 angegeben.

Für jeweils Teilbereiche des hier vorgeschlagenen Bewegungsplaners für ein Fluggerät wurden in der Vergangenheit verwandte Arbeiten durchgeführt. So wurden bereits Planungsumgebungen für die Erstellung umfassend vorgeplanter, kartenbasierter Missionen im militärischen Umfeld entwickelt und zugelassen (NASA). Dabei wurde die Sicherheit durch in regelmäßigen Streckenintervallen vorgeplante Notlandetrajektorien gewährleistet, die im Flug vom einem Zustandsautomaten in Echtzeit angewählt werden konnten.

Ebenfalls kartenbasiert wurden bereits in den 1990er Jahren GCAS Systeme (Ground Collision Avoidance Systems) entwickelt, die automatisiert Kollisionen mit dem Geländeverlauf durch gezielte Manöver verhindern (NASA, Airbus). Bahnplanung mit vorgeplanten Bahnabschnitten wurde erstmals von Emilio Frazzoli demonstriert. Frühe Arbeiten beschränken sich auf sogenannte Motion Primitives mit konstanten Trimmzuständen, welche später auf komplexere Reglervorgaben erweitert wurden. Auf anfangs vorgeplante Bahnen folgten Anwendungen, bei denen die Bahn während des Fluges mittels mitgeführten Manöverbibliotheken generiert wurde.

Eine vollständige Missionsvorplanung hat den Nachteil, dass die Entscheidungsfähigkeit (z.B. für einen Autopiloten bzw. eine automatische Steuerung) während des Flugs stark eingeschränkt ist, nämlich auf die vor dem Flug berücksichtigten Szenarien. In einer unsicherheitsbehafteten Umgebung erfordert dies eine komplexe Vorausplanung, um auch unwahrscheinliche Ereignisse vor deren Eintreten vorherzusehen und zu berücksichtigen. In der Praxis erfordert ein solcher Ansatz einen hohen Verzweigungsgrad im Planungsnetzwerk sowie eine feine zeitliche und/oder räumliche Diskretisierung, um in ausreichend kurzen Zeitintervallen auf sich ändernde Umstände reagieren zu können. Dabei gehen der Grad der Diskretisierung und der Verzweigung linear bzw. exponentiell in die Speicheranforderungen für ein solches Planungs- bzw. Routennetzwerk ein. Im Sinne der Luftfahrt sichere Missionsplanungen sind mit einem solchen Vorausplanungsansatz daher nicht abzubilden.

Im Gegensatz zur Vorausplanung, bei der alle möglichen Flugzustände, die ein Fluggerät während der Mission einnehmen kann, vorab bekannt sind und überprüft (zertifiziert) werden können, bieten auf der Flugplattform (d.h. dem Fluggerät selbst) ausgeführte Planungsalgorithmen weitaus eingeschränktere Transparenzeigenschaften. Häufig handelt es sich hierbei um optimierungs- oder sampling-basierte Ansätze, die kein streng deterministisches Verhalten aufweisen. Dies stellt insbesondere bei der Zertifizierung der Planungsumgebung für personentragende Fluggeräte ein schwerwiegendes Hindernis dar.

Damit bestehen im Stand der Technik eindeutige Defizite im Hinblick auf im zivilen Bereich einsetzbare Algorithmen zur autonomen Luftfahrtnavigation in komplexen Umgebungen mit hohen Sicherheitsanforderungen bei gleichzeitig beschränkten Speicheranforderungen.

DE 10 2019 103 173 A1 offenbart zur Fluggerätesteuerung die Verwendung von sogenannten Konfidenzintervallen, welche Konfidenzintervalle jeweils ein Raumvolumen repräsentieren, in welchem das Fluggerät ohne vorgeplante Bahn manövrieren kann, weil kein (bekanntes) Gefahrenpotenzial existiert, welches das Fluggerät jedoch nicht oder nur an vordefinierten Stellen verlassen kann, sodass die erforderliche Lokalisierbarkeit des Fluggeräts sichergestellt ist. Innerhalb des Konfidenzintervalls umfliegt das Fluggerät etwaige Hindernisse entlang der vorgeplanten Bahn mittels zugeordneter (zulässiger) Manöver und kehrt dann auf die geplante Bahn zurück.

Der Erfindung liegt die Aufgabe zugrunde, ein Verfahren bzw. einen Bewegungsplaner sowie ein entsprechend ausgestattetes Fluggerät anzugeben, mit dem eine autonome Luftfahrtnavigation in komplexen Umgebungen mit hohen Sicherheitsanforderungen bei gleichzeitig beschränkten Speicheranforderungen weiter verbessert wird.

Die hier beschriebene Methode der Bewegungsplanung überwindet die im Stand der Technik vorhandene Lücke, wie mit handhabbarem Speicherbedarf sichergestellt werden kann, zu jedem Zeitpunkt auf unvorhergesehene Ereignisse reagieren zu können, während die Inspizierbarkeit und quasideterministischen Eigenschaften der Lösung bewahrt werden, was aus Sicherheits- bzw. Zertifizierungsgründen erforderlich ist.

Die oben formulierte Aufgabe wird erfindungsgemäß gelöst durch ein Verfahren mit den Merkmalen des Anspruchs 1 und durch ein System mit den Merkmalen des Anspruchs 10.

Vorteilhafte Weiterbildungen sind in den Unteransprüchen angegeben. Bei einem erfindungsgemäßen Verfahren zur Steuerung eines Fluggeräts eines bestimmten Typs, insbesondere Multirotor-VTOL-Fluggerät mit vorzugsweise elektrisch angetriebenen Rotoren, ist vorgesehen, dass
a) vor einem Flug eine finite Anzahl an Nominaltrajektorien für das Fluggerät und eine finite Anzahl an um die Nominaltrajektorien herum angeordneten Notfalltrajektorien berechnet und in einer an Bord des Fluggeräts verfügbaren Datenbank abgespeichert werden;
b) vor einem Flug eine finite Anzahl an typspezifischen, zulässigen Flugmanövern des Fluggeräts vorausgeplant und als Manöverbibliothek in der Datenbank abgespeichert werden;
c) optional vor einem Flug eine Anzahl diskreter Flugebenen mit unterschiedlichen Flughöhen definiert und in der Datenbank abgespeichert werden;
d) während eines Flugs innerhalb eines Echtzeitalgorithmus mittels eines rechnergestützten Transitionsplanungsalgorithmus auf die Datenbank zugegriffen wird, um in Anhängigkeit von einem durch Sensoren erfassten Zustand des Fluggeräts unter Verwendung der vorausgeplanten Flugmanöver zwischen den Nominaltrajektorien und den Notfalltrajektorien sowie optional zwischen den definierten Flugebenen zu wechseln und einen Bahnfolgeregler und/oder eine Flugsteuerung des Fluggeräts entsprechend anzusteuern.

Das erfindungsgemäße Verfahrens sieht weiterhin vor, dass vor dem Flug zumindest für jede Nominaltrajektorie Transitionsintervalle bzw. Entry- und Exit-Intervalle definiert werden und dass ein Wechsel zwischen Nominaltrajektorien und optional zwischen Flugebenen nur innerhalb dieser Transitionsintervalle bzw. Entry- und Exit-Intervalle zulässig ist.

Bei einem erfindungsgemäßen rechnergestützten System zur Steuerung eines Fluggeräts eines bestimmten Typs nach dem erfindungsgemäßen Verfahren, insbesondere eines Multirotor-VTOL-Fluggeräts mit vorzugsweise elektrisch angetriebenen Rotoren, mit wenigstens einer Rechnereinheit, die als bodengestützte Rechnereinheit und/oder als Bord-Rechnereinheit des Fluggeräts ausgebildet ist, ist die Rechnereinheit ausgebildet und eingerichtet zum:
A) Ausführen eines Vorplanungsalgorithmus zum Durchführen von Verfahrensschritt a);
B) Bereitstellen der Datenbank;
C) Ausführen eines Echtzeitalgorithmus, der ein Entscheidungsmodul bereitstellt, dessen Eingang der Zustand des Fluggeräts gemäß Verfahrensschritt d) und dessen Ausgang eine dem aktuellen Zustand des Fluggeräts am besten entsprechende Trajektorie aus der finiten Anzahl von Nominal- und Notfalltrajektorien entsprechend einer Bewertungsmetrik ist;
D) Ausführen des Transitionsplanungsalgorithmus gemäß Verfahrensschritt d).

Das erfindungsgemäße Systems sieht weiterhin vor, dass der Transitionsplanungsalgorithmus zum Veranlassen eines Wechsels zwischen Nominaltrajektorien nur innerhalb der Transitionsintervalle bzw. Exit- und Entry-Intervalle ausgebildet ist.

Ein erfindungsgemäßes Fluggerät, insbesondere Multirotor-VTOL-Fluggerät mit vorzugsweise elektrisch angetriebenen Rotoren, ist ausgestattet mit einem erfindungsgemäßen System.

Als Basis für die Bahnplanung dient eine vorberechnete Struktur aus einer finiten Anzahl Nominal- und in einer ebenfalls finiten Anzahl von darum herum, bevorzugt in einer Baumstruktur, angeordneten Notfall- oder Contingencybahnen bzw. entsprechenden -Trajektorien. Zusätzlich werden optional diskrete Flugebenen definiert, zwischen welchen das Fluggerät wechseln kann. Mittels in einer Datenbank abgelegter Manöver und eines an Bord des Fluggeräts in Echtzeit ausgeführten Transitionsplanungsalgorithmus mit bevorzugt beschränktem Zeithorizont kann in Echtzeit und in Reaktion auf geänderte Umstände oder Ereignisse zwischen unterschiedlichen Flugbahnen und optional zudem zwischen unterschiedlichen Flughöhen flexibel gewechselt werden (sog. Transition), wobei der Speicherbedarf beherrschbar und eine vollständige Inspizierbarkeit gewährleistet ist. Der angesprochene Flughöhenwechsel ist nur optional, weil das erfindungsgemäße Verfahren grundsätzlich auch bereits in einer Ebene, also in zwei Dimensionen vorteilhaft anwendbar ist.

Eine Planungsmethode bzw. ein Transitionsplanungsalgorithmus mit beschränktem Zeithorizont berechnet in jedem Planungsschritt lediglich eine Planungslösung für ein begrenztes Zeitintervall (im Gegensatz zu einer Planungslösung bis zu einem Zielpunkt der Flugbahn). Dadurch ist die erforderliche Berechnungszeit pro Updatezyklus in der Regel kürzer als bei Planungsmethoden, die in jedem Zeitschritt bis zum Zielpunkt planen. Ergebnisse solcher Methoden sind zwar nicht optimal, liefern jedoch schnell Ergebnisse, die beliebig nahe an der optimalen Lösung liegen (können).

Eine Weiterbildung des erfindungsgemäßen Verfahrens sieht entsprechend vor, dass die Notfalltrajektorien in einer Baumstruktur und/oder in regelmäßigen Abständen angeordnet sind, wobei vorzugsweise die Bahnplanung in Schritt a) mittels quasi-zufälliger Algorithmen zur Bahnplanung erfolgt, welcher Vorgang höchst vorzugsweise bis zu einem angestrebten Verzweigungsgrad auf den in einem vorherigen Schritt generierten Notfalltrajektorien wiederholt wird, sodass eine baumartige Flugbahnenstruktur entsteht, die in der Datenbank abgespeichert werden kann und eine flexible Reaktion auf Ereignisse zulässt.

Wenn deterministische bzw. analytische Lösungen unmöglich sind, wird in der Regel auf sampling-basierte Planungsansätze zurückgegriffen, die den Suchraum mittels zufällig generierter Samplingpunkte erschließen. Quasi-zufällige Methoden erschließen den Suchraum nach nicht-zufälligen Kriterien (aber dennoch sampling-basiert). Dadurch kann das deterministische Verhalten der Planungsmethode wiederhergestellt werden.

Eine andere Weiterbildung des erfindungsgemäßen Verfahrens sieht entsprechend vor, dass der Transitionsplanungsalgorithmus über einen beschränkten Zeithorizont verfügt. Dadurch lassen sich die Systemanforderungen reduzieren, wobei sich insbesondere die Anforderungen an die Onboardsysteme durch geringeren Berechnungsaufwand der gewählten Methoden verringern.

Vor und nach einer Transition bewegt sich das Fluggerät auf vorausberechneten und in der Datenbank abgelegten Flugbahnen. Die Begriffe "Bahn" bzw. "Flugbahn" und "Trajektorie" werden hier und im Folgenden als Synonyme verwendet.

Transitionen zwischen Flßughöhen (Flugebenen) und -bahnen sind erfindungsgemäß nur in für jede Trajektorie vorab definierten sog. Exit- und Entryintervallen möglich. Ein entsprechend ausgebildetes Contingency- bzw. Notfall-Modul des Bahnplaners entscheidet bei entsprechender Ausgestaltung auf einer breiten Basis an Fluggeräte-spezifischen Parametern sowie (vorzugsweise sensorisch erfassten) Umgebungsvariablen, ob und wenn ja auf welche Trajektorie bzw. Flugebene eine Transition erforderlich ist. Die Gesamtmenge aus vorausgeplanten Flugbahnen und definierten Transitionsintervallen bleibt vorab inspizierbar und ist an die örtlichen Gegebenheiten anpassbar.

Durch Vorgabe von Randbedingungen können Regularien, Flugverbotszonen, Wetterverhältnisse u.v.m. in der Planungslösung berücksichtigt werden. Flugverbote zwischen zwei Trajektorien können z.B. berücksichtigt werden, indem in Bereichen, die ein Durchfliegen der Verbotszone nach sich zögen, die Transition von einer auf die andere Trajektorie durch entsprechende Definition von Exit- und Entryintervallen unterbunden wird.

Eine andere Weiterbildung des erfindungsgemäßen Verfahrens sieht vor, dass in Schritt d) durch Zusammenwirken eines Notfall-Moduls und eines Transitionsplanungsalgorithmus auf Basis von Fluggerät spezifischen Parametern und Umgebungsvariablen bestimmt wird, ob und ggf. auf welche Trajektorie und/oder Flugebene eine Transition erforderlich ist.

Um eine weitere Reduzierung der Planungskomplexität zu erzielen, kann in Weiterbildung des erfindungsgemäßen Verfahrens (in Schritt d)) die horizontale Transition zwischen unterschiedlichen Flugbahnen vollständig von der vertikalen Transition zwischen Flugebenen entkoppelt werden. Dadurch lassen sich diskrete Wechsel der Flughöhe bei Bedarf allein reglergestützt und ohne den Bedarf eines vorgeschalteten Planungsalgorithmus umsetzen.

Das angegebene Verfahren berechnet bei entsprechender Ausgestaltung bzw. Weiterbildung sowohl eine Kombination einzelner Bahnen als auch geschlossene Mengen erreichbarer Bahnen (das sind vorausgeplante Bahnen nebst konservativ abgeschätzten Transitionsintervallen zwischen den vorausgeplanten Trajektorien). Dadurch kann ein schwieriges Planungsproblem trotz enger Grenzen (z.B. räumliche Ausdehnung, Flugleistung) auf eingebetteten Rechnern (also Rechnereinheiten an Bord eines Fluggeräts) in Echtzeit lösbar implementiert werden. Die Datenbank umfasst vorzugsweise sowohl explizit vorausberechnete Trajektorien, welche zu einem Landeplatz führen, als auch vorab definierte Volumina, innerhalb welcher ein Online-/Echtzeitplanungsalgorithmus zur Laufzeit eine Trajektorie berechnet, um z.B. zwischen zwei vorberechneten Trajektorien zu wechseln. Alternativ kann in einem solchen Volumen ein ebenfalls vorausberechnetes Manöver ausgeführt werden, z.B. eine Warteschleife. Vorteilhaft ist, dass eine zur Laufzeit innerhalb eines solchen Volumens geplante Trajektorie immer auf einer vorausberechneten Trajektorie startet und endet. Start- und Zieltrajektorie können, müssen aber nicht identisch sein. Der Online-/Echtzeitplanungsalgorithmus stellt bei Ausführung sicher, dass Trajektorien außerhalb des definierten Volumens nicht erreichbar sind.

Wird ein vollständig vorberechnetes Manöver, wie eine Warteschleife oder ein Wechsel der Flughöhe, in einem Transitionsintervall ausgeführt, ist die Bahn inklusive Start- und Endpunkte auf vorberechneten Trajektorien bestimmt. Im Fall einer Transition zwischen zwei Trajektorien mittels Onlineplanungsalgorithmus wird die Bahn erst zur Laufzeit geplant, wobei im Rahmen einer Ausgestaltung der Erfindung sichergestellt wird, dass das vorab definierte Intervall nicht verlassen wird. Es ist damit nicht die exakte Bahn, wohl aber die Menge aller möglichen Zustände während der Transition bekannt.

Die in Echtzeit lösbare Implementierung wird vorzugsweise durch quasi-deterministische Vorausplanung über quasi-diskrete Zustände in Verbindung mit einer strikten Priorisierung und Eingrenzung der Anzahl berücksichtigter Flugbahnen und -manöver ermöglicht. Unterschiedliche Contingency-Strategien werden vorzugsweise nach missionsspezifischen Kriterien priorisiert. Beispielsweise wäre es naheliegend, zeitliche Konfliktlösungen gegenüber räumlichen Konfliktlösungen zu bevorzugen. Dies kann durch eine Geschwindigkeitsänderung ohne Änderung der räumlichen Flugbahn erreicht werden, um eine bestimmte räumliche Position zu einer bestimmten Zeit zu meiden. Ferner können vertikale Manöver stärker priorisiert werden als horizontale Manöver (Annahme: horizontale Manöver verursachen in urbaner Umgebung eher Hinderniskonflikte als vertikale Manöver).

Dies führt während des Fluges zu einer erhöhten Planungsflexibilität und erlaubt die Integration reaktiver Planungsanteile (z.B. Wechsel auf eine andere Flugbahn). Darüber hinaus wird bei gleichbleibender Transparenz und Überprüfbarkeit die Komplexität der Vorausplanung sowie die Speicherkomplexität der auf dem Fluggerät vorzuhaltenden Planungslösung entscheidend reduziert. Dadurch ist bereits vor Abflug jedes mögliche Ereignis, das während des Fluges auftreten kann, adäquat berücksichtigt, wodurch insbesondere die Nachvollziehbarkeit für Betreiber, Luftraummanagement (sog. ANSPs: Air Navigation Service Provider) und Luftfahrtbehörden gewährleistet ist.

Das Bahnplanungsverfahren umfasst im Zuge einer bevorzugten Ausgestaltung insbesondere die folgenden Fähigkeiten:
1. Vorausplanung der Flugbahn in urbaner Umgebung;
2. Berücksichtigung von Landeplätzen und Ausweichrouten;
3. Separation zu angrenzendem Luftverkehr (= "Well-Clear"-Funktion; Vorgabe durch ATM/UTM - Air Traffic Management / Unmanned Aircraft System Traffic Management).

Es basiert insbesondere auf den folgenden Rahmenbedingungen, die vorzugsweise vor Abflug spezifiziert sein müssen:
1. Es werden Landeplatzinformation, Gefahrenpotentiale, Luftraumstrukturen, etc. in Form einer erweiterten 3D Karte des Fluggebietes bereitgestellt, welche als Grundlage des Bahnplanungsverfahrens dient.
2. Beschränkte Störeinwirkungen während des Nominalbetriebs (z.B. maximale Wind- und Böenstärke) werden berücksichtigt. Die Offlineplanung basiert auf zum Planungszeitpunkt verfügbaren Daten und berücksichtigt vorzugsweise innerhalb der Flugenvelope erwartete Änderungen der aktuellen Verhältnisse. Vorzugsweise können Echtzeitdaten im Rahmen der Analyse post-optimaler Sensitivitäten während des Fluges berücksichtigt werden. Die Erfindung beschränkt sich allerdings nicht hierauf.
3. Flugleistungsparameter (z.B. Dynamik und Kinematik) des Luftfahrzeugs sind bekannt und werden berücksichtigt. Diese Parameter fließen als Randbedingungen in den Planungsalgorithmus ein und sind damit in der Planungslösung berücksichtigt. Technisch umgesetzt werden kann dies durch (im Einzelfall) manuelle Eingabe, bevorzugt jedoch die Verknüpfung mit einem hinterlegten Modell des Fluggeräts.
4. Eine Modellgüte (= Abweichung zwischen Modell und beobachtetem Flugverhalten) wird berücksichtigt. Als Modell ist hier eine mathematische Nachbildung des Fluggeräts und seiner Umgebung unter vereinfachenden Annahmen zu verstehen. Das Modell geht in den Planungsalgorithmus ein, um eine Anpassung der Planungslösung an das spezifische Fluggerät und seine Umgebung zu ermöglichen. Für die Betrachtung damit verbundener Unsicherheiten wird eine Abschätzung der Modellgüte getroffen und mitberücksichtigt.
5. Auf Basis der vorstehenden Punkte 2. - 4. wird eine Analyse der Erreichbarkeitsmenge (= Vereinigungsmenge aller möglichen Bahnen, die aus einer bestimmten Reglervorgabe aufgrund von Abweichungen resultieren können) durchgeführt. Die sogenannte Erreichbarkeitsanalyse analysiert, welche Zustände ein System auf Basis seines Momentanzustands sowie aufgrund von Steuer- und Störgrößen erreichen kann. Das Ergebnis wird in Punkt 6 dazu verwendet, Regler zu synthetisieren, welche Regler die Erreichbarkeitsmenge für die Ausführung des jeweiligen Manövers minimieren.
6. Es werden Manöverbibliotheken (= endliche Menge möglicher Flugbahnsegmente zur Bahnplanung) unter Berücksichtigung der Erreichbarkeitsmenge definiert und bereitgestellt.
7. Es existiert eine Möglichkeit zur Zustandsautomatisierung, wonach die Transitionsmethode bzw. der Transitionsplanungsalgorithmus in Form eines endlichen Zustandsautomaten abgebildet wird.

Eine Weiterbildung des erfindungsgemäßen Verfahrens sieht entsprechend vor, dass Erreichbarkeitsmengen bestimmt werden auf Grundlage von wenigstens einem der folgenden:
i) Störeinwirkungen während des Nominalbetriebs, z.B. maximale Wind- und Böenstärke;
ii) bekannte Flugleistungsparameter, z.B. Dynamik und Kinematik, des Fluggeräts;
iii) einer Modellgüte in Form einer Abweichung zwischen einem zumindest dem Schritt a) zugrundeliegenden physikalischen Modell des Fluggerätsund einem beobachteten oder gemessenen Flugverhalten.

Bei einer anderen Weiterbildung des Verfahrens kann außerdem vorgesehen sein, dass die Erreichbarkeitsmengen verwendet werden zur Vorausplanung der Flugmanöver in Verfahrensschritt b).

Bei wieder einer anderen Weiterbildung des Verfahrens kann vorgesehen sein, dass Landeplatzinformation, Gefahrenpotentiale, Luftraumstrukturen, etc. in einer erweiterten 3D-Karte des Fluggebietes bereitgestellt werden, welche Karte als Grundlage der Trajektorienplanung in Verfahrensschritt a) dient.

Der mehrstufige Bahnplanungsprozess umfasst bei entsprechender Ausgestaltung der Erfindung eine:
1. Identifikation von Ausweichlandeplätzen auf Karte und Klassifizierung nach Kriterien (Sicherheit, Gefährdungspotential durch Umwelt, Eignung, Erreichbarkeit, etc.); dies wird vorzugsweise automatisiert durch die Analyse geographischer Datenbanken und Auswertung von Satellitenbildern ausgeführt. Es besteht weiter die Möglichkeit, zusätzliche Landeplätze manuell hinzuzufügen oder bereits identifizierte Landeplätze aus der Datenbank zu löschen. Landeplätze werden u.a. anhand folgender Kriterien ausgewählt: Anflugrichtung und -winkel, Bodenbeschaffenheit, Risikobewertung der Umgebung, Profil des Geländes, Bewuchs/Vegetation.
2. Vorausplanung einer optimierten Nominaltrajektorie am Boden z.B. auf einem Anwender-PC oder vor Start an Bord des Fluggeräts.
3. Vorausplanung von Contingency- oder Notfalltrajektorien in regelmäßigen Intervallen am Boden auf einem Anwender-PC oder vor Start an Bord (vorzugsweise als Baumstruktur).
4. Definition und Zuweisung von (Transitions-)Intervallen, innerhalb welcher Intervalle die Trajektorien/Flugebenen verlassen bzw. betreten werden dürfen.
5. Echtzeitplanung der tatsächlichen Flugbahn entlang der Nominaltrajektorie und innerhalb der Menge aller Contingencytrajektorien an Bord des Fluggerätes, vorzugsweise umfassend:
   i) Update eines Systemzustand des Fluggeräts (nach Art eines Zustandsautomaten); die Ausgestaltung eines das Fluggerät beschreibenden Zustandsautomaten hängt stark von dem zugrundeliegenden Fluggerät ab. Die vorliegende Erfindung ist nicht auf ein bestimmtes Fluggerät begrenzt. Wichtig ist, dass eine Änderung des Zustands des Fluggeräts oder seiner Umgebung eine Änderung der zu befliegenden Trajektorie nach sich ziehen kann. Allgemein ist ein Zustandsautomat oder ein endlicher Automat (EA, auch Zustandsmaschine; englisch: finite state machine, FSM) ein Modell eines Verhaltens, bestehend aus Zuständen, Zustandsübergängen und Aktionen. Ein solcher Automat heißt endlich, wenn die Menge der Zustände, die er annehmen kann, endlich ist. Ein endlicher Automat ist ein Spezialfall aus der Menge der Automaten.
   ii) Daraus abgeleitet Update der zu befliegenden Trajektorie und/oder Flugebene;
   iii) Update der ausgewählten Bahn aus vorherigem Zeitschritt unter Berücksichtigung einer Bewertungsfunktion und ggf. Transition auf neue Bahn durch beispielsweise eine modellbasierte Planungsmethode mit beschränktem Zeithorizont. Bahn und Trajektorie werden hier als Synonyme verwendet, obwohl eine Bahn streng genommen nur räumliche Information beinhaltet, während eine Trajektorie noch Informationen über die zeitlichen Ableitungen der Bahn enthält. Zu jedem Zeitschritt wird evaluiert, ob die aktuelle (also im vorherigen Zeitschritt ausgewählte) Trajektorie noch immer die zur Zielerreichung beste Option darstellt. Modellbasierte Methoden beziehen Informationen, die auf der Modellierung wichtiger Einflussgrößen beruhen, in die Lösungsfindung ein. Dies kann in diesem Fall ein Modell der Planungsumgebung (z.B.: Hinderniskarte, Oberflächenmodell, Wettermodell) und/oder ein Modell des Fluggeräts sein (dynamisches oder kinematisches Modell).

Eine diesbezügliche Weiterbildung des erfindungsgemäßen Verfahrens kann entsprechend vorsehen, dass in Schritt d) eine zeitschrittweise Echtzeitplanung der tatsächlichen Flugbahn entlang einer Nominaltrajektorie und innerhalb der Menge aller Notfalltrajektorien an Bord des Fluggerätes erfolgt, einschließlich:
i) Update eines Systemzustands des Fluggeräts (Zustandsautomat);
ii) daraus abgeleitet, Update der zu befliegenden Trajektorie und Flugebene;
iii) Update einer ausgewählten Bahn aus dem vorherigen Zeitschritt ii) unter Berücksichtigung einer Bewertungsfunktion und bei Bedarf Transition auf eine neue Bahn, insbesondere durch eine modelbasierte Planungsmethode mit beschränktem Zeithorizont.

Der Automat des Systemzustands ist unabhängig von der Flugführungsebene. Daher existieren vorzugsweise zwei Updatezyklen unabhängiger Systeme, die lediglich Informationen untereinander austauschen.

Das hier beschriebene Verfahren wird bevorzugt zu variablen Teilen am Boden und während des Fluges an Bord des Fluggeräts durchgeführt. Ausführungsort des Bodenanteils kann dabei der Bordrechner (an Bord befindliche Rechnereinheit, sog. Embedded-System) des Fluggerätes während des Aufenthalts am Boden sein oder auch ein externer Rechner, z.B. Anwender-PC, von welchem in einem Zwischenschritt die Planungsergebnisse vor dem Start auf das Fluggerät übertragen werden.

Ein entsprechende Weiterbildung des erfindungsgemäßen Verfahrens sieht vor, dass die Schritte a) bis c) auf einem bodengestützten Rechner ausgeführt werden und das Ergebnis anschließend an das Fluggerät übertragen und an Bord des Fluggeräts in der Datenbank gespeichert wird; oder dass die Schritte a) bis c) auf einem Bordrechner des Fluggeräts ausgeführt werden und das Ergebnis an Bord des Fluggeräts in der Datenbank gespeichert wird.

Der Echtzeit-Anteil wird bevorzugt im Flug und an Bord des Fluggerätes auf der verfügbaren Bordrechnereinheit ausgeführt. Der hierbei verwendete Algorithmus ist vorzugsweise dergestalt ausgebildet, dass er sowohl auf einem Computer mit Anwenderbetriebssystem als auch auf Embedded-Systemen ausgeführt werden kann. Eine genauere Spezifikation der Hardware ist jedoch nicht Gegenstand der vorliegenden Erfindung.

Um die Echtzeitplanung und -ausführung einer Flugverbindung zwischen zwei Punkten im Raum zu vereinfachen, wird vorzugsweise am Boden auf Basis vorhandener Karten (siehe Beschreibung der Rahmenbedingungen) eine teilweise Vorausplanung der Mission durchgeführt. Deren Ergebnisse werden in der oben erwähnten Datenbank an Bord des Fluggerätes gespeichert und so während des Fluges mitgeführt. Unter Zuhilfenahme dieser Datenbank kann die Komplexität des Echtzeit-Algorithmus maßgeblich reduziert werden. Diese Reduzierung des Vorplanungs- und Speicheraufwands stellt einen maßgeblichen Teil der vorliegenden Erfindung dar.

Für eine Vorausplanung auf globaler Ebene wird bzw. werden bevorzugt für das Fluggerät zumindest eine, vorzugsweise mehrere sogenannte Manöverbibliothek(en) berechnet, insbesondere für unterschiedliche Einsatz- und Betriebsszenarien. Diese umfassen vollständig vorberechnete und in der Datenbank vorgehaltene (Flug-)Manöver. Bei der Berechnung dieser Manöver wird die oben definierte Erreichbarkeitsmenge berücksichtigt. Anstatt eines Manövers in Form einer Zustandsfolge abzuspeichern, werden Manöver als ausführbare Regler in der Manöverbibliothek abgelegt. Diese Regler sind dahingehend optimiert, dass die durch die Ausführung eines Reglers unter Annahme begrenzter Störeinwirkung erreichbare Menge an Zuständen bzw. die mögliche Abweichung vom Zielzustand minimal wird. Die Information über diese erreichbare Menge wird dem Manöver/Regler als Attribut zugewiesen. Ein Bahnplaner, welcher mehrere Manöver zu einer Trajektorie kombiniert, kann auf Basis dieser Information Entscheidungen treffen. Beispielsweise kann die Möglichkeit einer Kollision durch Ausführung eines Manövers in einem Startzustand ausgeschlossen werden, wenn die durch Ausführung erreichbare Menge kollisionsfrei ist. Aus einem auszuführenden Manöver wird demnach ein Regelgesetz abgeleitet und so optimiert, dass die erwartete Abweichung von der Solltrajektorie minimiert wird. Dieser Prozess wird vorliegend auch als "Reglersynthese" bezeichnet. Die Manöverbibliothek umfasst wenigstens eine diskrete Repräsentation der Flugenvelope unter Berücksichtigung unterschiedlicher Performance-Zustände des Fluggerätes (z.B. Nominalzustand, Ausfallszenarien, Umgebungsbedingungen) und wird durch Ausnutzung von Symmetrien und Superposition speicheroptimiert. Exakt lässt sich die Envelope nur durch kontinuierliche Methoden beschreiben. Da eine kontinuierliche Beschreibung eine unendliche Anzahl von Manövern erfordert, wird die tatsächliche Envelope durch ein ausreichend feines Netz diskreter Zustände näherungsweise beschrieben. Diese diskreten Zustände dienen als Trimmzustände und werden durch weitere diskrete Manöver verbunden. Dadurch kann die Envelope mit vertretbarem Rechen- und Speicheraufwand ausreichend genau berücksichtigt werden. Betreffend die genannten Performance-Zustände bleibt das Diskretisierungsnetz gleich, es ändern sich jedoch die Grenzen der Envelope. Dies kann wahlweise als mehrere Repräsentationen oder als Untermengen der Envelope im leistungsfähigsten Zustand beschrieben werden. Aus Effizienzgründen bedient sich die Implementierung vorzugsweise letztgenannter Variante.

Zur Speicheroptimierung kann folgendermaßen vorgegangen werden: Die dynamischen Eigenschaften der meisten Fluggeräte sind entlang der Roll- und Gierachse symmetrisch. Es reicht demnach vorzugsweise aus, Zustände des Kurvenflugs in positiver Richtung zu definieren und zu speichern. Die entgegengesetzte Bewegung ergibt sich dann aus der Negation der gespeicherten Zustände. Im Falle des Volocopter^{®} aus dem Hause der Anmelderin lässt sich diese Symmetrie in gewissem Rahmen auch auf die Nickachse verallgemeinern. Dasselbe Prinzip kann auf die Ableitungen der Rotationsbewegung sowie die Translationsbewegung und deren Ableitungen verallgemeinert werden.

Superpositionseigenschaften kommen dort zum Tragen, wo Zustände durch die Überlagerung zweier elementarer Zustände erzeugt werden können, ohne ein dediziertes Manöver speichern zu müssen. So können im Fall des Volocopter^{®} z.B. die horizontale und vertikale Bewegung im Rahmen der Flugleistungsgrenzen vollständig entkoppelt betrachtet werden. Ein Steigflug mit Rechtskurve kann beispielsweise durch die Überlagerung eines vertikalen Steigmanövers und einer ebenen Rechtskurve generiert werden, ohne diesen explizit in der Datenbank ablegen zu müssen.

Eine entsprechende Weiterbildung des erfindungsgemäßen Verfahrens sieht zu diesem Zweck vor, dass die Manöverbibliothek wenigstens eine diskrete Repräsentation einer Flugenvelope des Fluggeräts unter Berücksichtigung unterschiedlicher Performance-Zustände des Fluggerätes, wie Nominalzustand, Ausfallszenarien oder Umgebungsbedingungen, beinhaltet und vorzugsweise durch Ausnutzung von Symmetrien und Superposition speicheroptimiert abgespeichert wird, wobei die Manöverbibliothek höchst vorzugsweise auf einen gegebenen Fluggerätetyp zugeschnitten ist.

Des Weiteren werden parametrisierte Trajektoriensegmente definiert. Als solche können lokal ausführbare (Teil-)Flugbahnen verstanden werden, die keinen Wechsel der ausgewählten (Nominal-)Trajektorie nach sich ziehen, sondern nach ihrer Beendigung auf diese zurückführen. Es handelt sich um unabhängig von einer globalen Referenz beschriebene Bahnabschnitte, die zu jedem Zeitpunkt basierend auf dem aktuellen Zustand des Fluggerätes ausgeführt werden können. Bespiele können Warteschleifen, zeitlich begrenzte Änderungen der Geschwindigkeit entlang der Flugbahn oder Steig- und Sinkflüge zum Wechseln allein der Flugebene sein.

Eine entsprechende Weiterbildung des erfindungsgemäßen Verfahrens sieht zu diesem Zweck vor, dass zusätzlich parametrisierte Trajektoriensegmente definiert und in der Datenbank abgespeichert werden, worunter lokal ausführbare Flugbahnen oder Teil-Flugbahnen verstanden werden, die keinen Wechsel einer ausgewählten Trajektorie nach sich ziehen, sondern nach ihrer Beendigung auf diese Trajektorie zurückführen, zum Bespiel Warteschleifen, zeitlich begrenzte Änderungen der Geschwindigkeit entlang der Flugbahn oder Steig- und Sinkflüge zum Wechseln der Flugebene.

Die Manöverbibliothek ist bevorzugt auf einen bestimmten Fluggerätetyp zugeschnitten. Alle aus ihr abgeleiteten Module sind damit für alle Fluggeräte desselben Typs nutzbar. Wenn viele Fluggeräte des gleichen Typs verwendet werden, reicht es aus, die Manöverbibliothek für diesen Fluggerätetyp einmal zu generieren und auf alle Exemplare des Fluggeräts zu überspielen. Dies gilt ebenfalls für alle Teilmengen der globalen Bibliothek für z.B. unterschiedliche Systemzustände.

Bei der Vorausplanung am Boden auf Missionsebene können unterschiedliche Datenschichten der Karte zu einem abstrakten Gefahrenpotential fusioniert werden, welches die Dichte unerwünschter Einflüsse auf das Fluggerät und dessen Mission in Abhängigkeit des Ortes repräsentiert. Verschiedene semantische Datenschichten können z.B. sein: Terrain, Population, Luftraumkarten, Hinderniskarten, Verkehrsdaten, Bewegungsprofile, Wetterkarten. Der Prozess der Risikobewertung (Risikometrik) ist in der Patentanmeldung EP20170891.4 beschreiben, auf die an dieser Stelle inhaltlich Bezug genommen wird.

Eine gewichtete Kostenfunktion aus diesem Gefahrenpotential, der Anzahl und Art erreichbarer Notlandeplätze sowie der energetischen Effizienz wird bevorzugt für die Optimierung einer Flugroute zwischen einem Start- und einem Endpunkt herangezogen. Die so erstellte Flugroute kann dann mit Trajektorien für unterschiedliche Bahnplanungsmodi erweitert werden, d.h. je nach Modus kann zwischen Start- und Endpunkt eine unterschiedliche Route resultieren. In festgelegten Strecken- bzw. Zeitintervallen werden Contingencytrajektorien zum Missionsziel (Endpunkt) als auch zu Ausweichlandeplätzen berechnet und in der Datenbank abgelegt.

Pro Wegstreckenintervall werden bevorzugt Trajektorien unter Berücksichtigung verschiedener Fluggerätezustände (nominal, Ausfallszenarien, operationelle Ereignisse) und Optimierungsziele berechnet und in der Datenbank abgelegt. Optimierungsziele können unter anderem Zeit-, Sicherheits-, oder Effizienzoptimalität sein.

Die Bahnplanung selbst erfolgt bevorzugt mittels an sich bekannter, quasi-zufälliger Algorithmen zur Bahnplanung. Damit können deterministische Eigenschaften erzwungen werden. Dieser Vorgang kann bis zu einem angestrebten Verzweigungsgrad auf den in einem vorherigen Schritt generierten Contingencytrajektorien wiederholt werden, sodass eine baumartige Flugbahnenstruktur entsteht.

In einem nächsten Schritt können jeder Trajektorie Transitionsintervalle zugewiesen werden, innerhalb welcher die jeweilige Trajektorie betreten bzw. verlassen werden kann. Des Weiteren können den Trajektorien Flugebenen mit ebenfalls vorgegebenen Transitionsintervallen zum Wechseln der Flugebene (Flughöhe) zugewiesen werden.

Jede Trajektorie wird bevorzugt anhand von Eigenschaften beschrieben, anhand welcher ein Echtzeitalgorithmus (Translationsplanungsalgorithmus) Entscheidungen über die Trajektorienauswahl treffen kann. Relevante Eigenschaften können z.B. Länge/Dauer, max. Geschwindigkeit/Lastvielfaches, Energiebedarf oder eine Risikometrik sein. Die Eigenschaften werden als Attribute der Trajektorie in Datenbank abgelegt.

Eine entsprechende Weiterbildung des erfindungsgemäßen Verfahrens sieht daher vor, dass jede Trajektorie anhand von in der Datenbank abgespeicherten Eigenschaften charakterisiert wird, anhand welcher Eigenschaften der Transitionsplanungsalgorithmus in Schritt d) Entscheidungen über die Trajektorienauswahl trifft, wobei relevante Eigenschaften z.B. eine Länge oder Dauer, eine max. Geschwindigkeit oder ein zulässiges Lastvielfaches, ein Energiebedarf oder eine Risikometrik sein können.

Falls die Vorplanung auf einem externen Rechner stattfindet, wird die Datenbank der Vorausplanung vor dem Flug auf das Fluggerät transferiert. Die Datenbank stellt Funktionen zur Rückgabe einzelner Trajektorien mit deterministischer und begrenzter Laufzeit bereit. Demnach verarbeitet die Datenbank Anfragen und stellt die Trajektorie bereit, wenn entsprechend angefragt wird. Einfachstes Beispiel hierfür kann (ohne Beschränkung) eine SQL-Schnittstelle sein. Die Laufzeit der Anfrage ist begrenzt und deterministisch. Dies ist in der Regel der Fall, wenn einfache Datenbanksuchen verwendet werden. Die Erfindung ist allerdings nicht auf die Verwendung eines bestimmten Protokolls festgelegt.

Bei der Echtzeitplanung und -ausführung an Bord des Fluggerätes während des Fluges entscheidet vorzugsweise ein entsprechendes Softwaremodul als Teil des Systems, welche der im Voraus berechneten Trajektorien und Flugebenen die zum jeweiligen Zeitpunkt beste im Sinne zuvor festgelegter Kriterien ist und übergibt diese Trajektorie an einen Bahnfolgeregler, der das Fluggerät entsprechend steuert bzw. die notwenigen Steuerkommandos bereitstellt. Wird ein Wechsel der Flugebene oder Trajektorie erforderlich, so geschieht dies bevorzugt an einem (zeitlich oder örtlich) nächstgelegenen Verzweigungspunkt der beschriebenen Baumstruktur, oder aber mittels des beschriebenen Transitionsplanungsalgorithmus im nächstgelegenen Transitionsintervall, falls kein Übergang entlang der Baumstruktur möglich ist.

Eine entsprechende Weiterbildung des erfindungsgemäßen Verfahrens sieht vor, dass ein Wechsel der Flugebene und/oder Trajektorie an einem nächstgelegenen Verzweigungspunkt der Baumstruktur oder mittels des Transitionsplanungsalgorithmus im nächstgelegenen Entry-/Exit-Intervall erfolgt, falls kein Übergang entlang der Baumstruktur möglich ist.

Mit zunehmendem Missionsfortschritt können nicht länger erreichbare Trajektorien vom Entscheidungsmodul ausgeblendet und so die Menge der berücksichtigten Trajektorien auf die Menge der im aktuellen Flugzustand noch erreichbaren Trajektorien reduziert werden, um die Komplexität zu verringern. Des Weiteren wird bevorzugt die Menge erreichbarer Trajektorien anhand ihrer Eigenschaften gefiltert und z.B. im Fall reduzierter Restmanövrierbarkeit des Fluggeräts (weiter) reduziert.

Eine entsprechende Weiterbildung des erfindungsgemäßen Verfahrens sieht zu diesem Zweck vor, dass mit einem zunehmenden Missionsfortschritt nicht länger erreichbare Trajektorien ausgeblendet werden und die Menge der berücksichtigten Trajektorien auf die Menge der im aktuellen Flugzustand des Fluggeräts noch erreichbaren Trajektorien reduziert wird, wobei vorzugsweise die Menge erreichbarer Trajektorien anhand ihrer Eigenschaften gefiltert und insbesondere im Fall reduzierter Restmanövrierbarkeit weiter reduziert wird.

Der Echtzeitalgorithmus umfasst bevorzugt ein Entscheidungsmodul, welches aus dem momentanen Systemzustand des Fluggeräts die zu befliegende Kombination aus Trajektorie und Flugebene bestimmt. Zu jedem Zeitschritt kann der Algorithmus zwischen einer endlichen Anzahl diskreter Trajektorien wählen, die jeweils mit der nominalen Bahn, einer Contingencytrajektorie oder einem temporär auszuführenden Trajektoriensegment (z.B. aus der Manöverbibliothek) korrespondiert.

Eine entsprechende Weiterbildung des erfindungsgemäßen Systems sieht zu diesem Zweck vor, dass der Echtzeitalgorithmus dazu ausgebildet ist, zu jedem Zeitschritt zwischen einer endlichen Anzahl diskreter Trajektorien, die jeweils mit der nominalen Bahn, einer Notfalltrajektorie oder einem temporär auszuführenden Trajektoriensegment korrespondiert, auszuwählen.

Wechsel zwischen Trajektorien, die nicht in der erwähnten Baumstruktur abgebildet sind, werden bevorzugt durch einen manöverbasierten Transitionsplanungsalgorithmus innerhalb vorab definierter Transitionsintervalle ausgeführt, wie bereits erwähnt. Das Verbleiben innerhalb dieser Intervalle wird algorithmisch sichergestellt, z.B. durch die Verwendung von Methoden mit Performance-Garantien (Reglersynthese mit Minimierung der Erreichbarkeitsmenge). Des Weiteren können über Randbedingungen Volumina definiert werden, die der Algorithmus dann nicht verlassen kann.

Eine entsprechende Richtline der Luftfahrtbehörden vorausgesetzt, können die Einzelschritte des beschriebenen Verfahrens zugelassen und zu einer gesamtzugelassenen Lösung integriert werden.

Das beschriebene Verfahren kann - wie bereits erwähnt wurde - zu variablen Teilen am Boden und während des Fluges an Bord des Fluggeräts durchgeführt werden. Ausführungsort des Bodenanteils kann dabei der Bordrechner des Fluggerätes während des Aufenthalts am Boden oder auch ein externer Anwender-PC sein, von welchem in einem Zwischenschritt die Ergebnisse vor Start auf das Fluggerät übertragen werden, wie ebenfalls bereits ausgeführt wurde. Der Echtzeit-Anteil wird im Flug und an Bord des Fluggerätes auf einer dort verfügbaren Bordrecheneinheit ausgeführt.

Der hierfür vorgesehene (Transitionsplanungs-)Algorithmus ist vorzugsweise dergestalt ausgebildet, dass er sowohl auf einem Computer mit Anwenderbetriebssystem als auch auf Embedded-Systemen ausgeführt werden kann. Die genaue Spezifikation der Hardware ist nicht Gegenstand der Erfindung.

Der von einem erfindungsgemäßen System umfasste Vorplanungsalgorithmus kann folgende Eingänge aufweisen bzw. empfangen:
1. Kartenmaterial: Kartendaten in Form verbreiteter Kartenformate, z.B. tiff, geotiff, kml, geojson, sdts, shapefiles, ...;
2. Start- und Zielkoordinaten: Eingabe als Text-Datei oder über eine Benutzeroberfläche.

Er kann folgende Ausgänge/Ausgaben liefern:
1. Georeferenzierte, parametrisierte oder nicht-parametrisierte Trajektorien mit Transitionsintervallen, vorzugsweise in Tabellenform;
2. parametrisierte Trajektoriensegmente (Flugebenenwechsel, Warteschleifen, etc.) zur Speicherung/Übertragung auf die (Onboard-)Datenbank.

Eine entsprechende Weiterbildung des erfindungsgemäßen Systems sieht im Rahmen einer praktischen Umsetzung vor, dass der Vorplanungsalgorithmus aufweist: Eingänge für Kartendaten in Form verbreiteter Kartenformate sowie für Start- und Zielkoordinaten, für deren Eingabe vorzugsweise eine Text-Datei oder eine Benutzeroberfläche vorgesehen ist, und Ausgänge für georeferenzierte, parametrisierte oder nicht-parametrisierte Trajektorien mit Exit- und Entry-Intervallen, vorzugsweise in Tabellenform, sowie für parametrisierte Trajektoriensegmente für Flugebenenwechsel, Warteschleifen, etc., die an die Datenbank übertragbar oder in der Datenbank speicherbar sind.

Die genannte (Onboard-)Datenbank enthält bevorzugt:
1. Kartenmaterial der Mission (für reaktive Bahnplanungsverfahren);
2. die Missionsvorplanung (Trajektorien und Trajektoriensegmente, s.o.);
3. die Manöverbibliothek mit Performancegarantien; für solche Manöver kann unter Berücksichtigung der Systemeigenschaften und der Annahme maximaler Störungen die maximale Abweichung von der Solltrajektorie angegeben werden. Zustände außerhalb dieses Intervalls kann das System physikalisch nicht erreichen.
4. Priorisierungsprotokolle bzw. Bewertungsmetriken zur Trajektorienauswahl. Unterschiedliche Contingency-Strategien werden nach missionsspezifischen Kriterien priorisiert. Beispielsweise wäre es naheliegend, zeitliche Konfliktlösungen gegenüber räumlichen Konfliktlösungen zu bevorzugen. Dies kann durch eine Geschwindigkeitsänderung ohne Änderung der räumlichen Flugbahn erreicht werden, um eine bestimmte räumlich Position zu einer bestimmten Zeit zu meiden. Ferner können vertikale höher als horizontale Manöver priorisiert werden (Annahme: horizontale Manöver verursachen in urbaner Umgebung eher Hinderniskonflikte als vertikale Manöver). Relevante Eigenschaften können z.B. Länge/Dauer, max. Geschwindigkeit/Lastvielfaches, Energiebedarf oder eine Risikometrik sein.

Der genannte Echtzeitalgorithmus kann insbesondere ein Entscheidungsmodul umfassen, dessen Eingang ein Systemzustand aus der Systemüberwachung darstellt. Sein Ausgang liefert die im aktuellen Zustand beste Trajektorie entsprechend der Bewertungsmetrik.

Der eigentliche Transitionsplanungsalgorithmus empfängt bevorzugt als Eingang:
1. einen Zustandsvektor aus einer Zustandsschätzung (insbesondere anhand einer Sensordatenfusion aus unterschiedlichen Sensoren bzw. Sensordaten);
2. die Exit- und Entryintervalle (d.h. die Transitionsintervalle) aus der Datenbank;
3. die Start- und Zielzustände aus der Datenbank (der Zustand beinhaltet neben dem Ort auch dessen zeitliche Änderung sowie die Lage und zeitliche Änderung);
4. die Manöverbibliothek aus der Datenbank;
5. die Zieltrajektorie und die Flugebene;
6. die Manöverpriorisierung aus der Datenbank.

Sein Ausgang liefert einen sog. Bahnvektor *(p, p, p̈*, 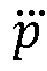 , *ψ*, *ψ̇*, *ψ̈*) an den Positionsregler des Fluggeräts, mit der Positionsvorgabe p sowie deren zeitlichen Ableitungen und dem Gierwinkel ψ sowie dessen zeitlichen Ableitungen. Der Positionsregler ist ein dem Bahnfolgeregler nachgeschalteter Regelkreis.

Eine entsprechende Weiterbildung des erfindungsgemäßen Systems sieht zwecks praktischer Umsetzung vor, dass der Transitionsplanungsalgorithmus aufweist: Eingänge für einen Zustandsvektor aus einer Zustandsschätzung des Fluggeräts, vorzugsweise in Form einer Sensordatenfusion aus unterschiedlichen Sensoren, für Exit- und Entry-Intervalle aus der Datenbank, für Start- und Zielzustände aus der Datenbank, für die Manöverbibliothek (insbesondere aus der Datenbank), für eine Zieltrajektorie und Ziel-Flugebene sowie für eine Manöverpriorisierung aus der Datenbank, und einen Ausgang für einen Bahnvektor *(p, p, p̈*, 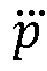 , *ψ*, *ψ̇*, *ψ̈*) zur Ausgabe an einen Positionsregler (den äußersten Regelkreis der Flugsteuerung) des Fluggeräts mit der Positionsvorgabe p und deren zeitlichen Ableitungen sowie dem Gierwinkel ψ und dessen zeitlichen Ableitungen. Der Startzustand ist der Zustand des Fluggeräts auf der aktuellen Trajektorie zum Zeitpunkt des Einleitens der Transition auf eine andere Trajektorie, der Zielzustand ist der Zustand auf der Zieltrajektorie, in welchem das Fluggerät auf die neue Trajektorie einschwenken soll.

Im Rahmen der Erfindung kann das System eine Vorausplanungseinheit aufweisen. Hierbei handelt es sich bevorzugt um einen Rechner (z.B. embedded, Anwender-PC, oder cloudbasiert), auf welchem der Vorausplanungsalgorithmus ausgeführt wird. Der Standort und die Art dieses Rechners sind ausdrücklich nicht genauer definiert, da es sich sowohl um den Bordrechner des Fluggerätes (im Bodenstandfall) als auch einen externen Rechner, z.B. in einer Bodenkontrollstation, um einen zentral verwalteten Server oder um cloudbasierte Architekturen handeln kann, von welchen die vorgeplanten Missionen auf das Fluggerät übertragen werden.

Ein Entscheidungsmodul kann allgemein ein Algorithmus sein, der in Abhängigkeit von zu definierenden Ereignissen und Filterung der (Trajektorien-)Datenbank nach zu definierenden Bewertungsmetriken die zu jedem Zeitpunkt geeignetste Trajektorie für das Erreichen des Missionsziels bereitstellt. Das Entscheidungsmodul wird an Bord des Fluggerätes und während des Fluges ausgeführt. Als Eingang dienen eine (Trajektorien-)Datenbank sowie ein Überwachungsalgorithmus, der den jeweiligen Zustand des Systems (Fluggerät) und seiner Umgebung anhand von Sensordaten ermittelt und als solcher in seiner Ausgestaltung ausdrücklich nicht Gegenstand dieser Erfindung ist.

Eine Echtzeit-Steuerungseinheit kann ein sich an Bord des Fluggerätes befindlicher Rechner (embedded oder Anwender-PC) sein, auf welchem der Algorithmus zur Steuerung des Fluggerätes ausgeführt wird. Basierend auf den Ergebnissen der Vorausplanung und der Vorgabe des Entscheidungsmoduls (s.o.) wird auf der Echtzeit-Steuerungseinheit die Flugbahn zur Transition zwischen (vorausgeplanten) Trajektorien berechnet und/oder eine Trajektorie aus der Datenbank an den Flugregler weitergeleitet.

Weitere Eigenschaften und Vorteile der Erfindung ergeben sich aus der nun folgenden Beschreibung von konkreten Ausführungsbeispielen anhand der Zeichnung.
Figur 1 zeigt eine mögliche Ausgestaltung des erfindungsgemäßen Fluggeräts;
Figur 2 zeigt schematisch die erreichbare Menge EM von Flugbahnen für ein Fluggerät;
Figur 3 zeigt schematisch einen Inhalt der Manöverbibliothek;
Figur 4 zeigt eine grafische Darstellung einer Missionsplanung für ein Fluggerät;
Figur 5 zeigt verschachtelte Contingencytrajektorien in einer Baumstruktur;
Figur 6 zeigt eine in Echtzeit berechnete (Online-)Transition zwischen zwei vorberechneten Trajektorien; und
Figur 7 zeigt ein Blockschaltbild/Ablaufdiagramm des beschriebenen Bahnplanungsverfahrens mit Hardwareallokation.

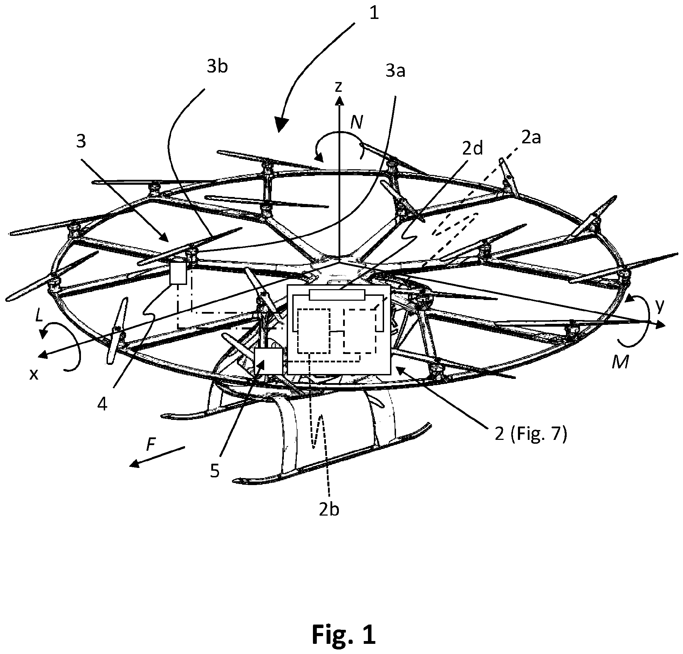

Figur 1 zeigt eine mögliche Ausgestaltung des erfindungsgemäßen Fluggeräts als Multirotor-eVTOL 1 mit vorliegend 18 Antriebseinheiten 3, von denen in Figur 1 nur eine explizit bezeichnet ist. Jede Antriebseinheit 3 umfasst gemäß der gezeigten Darstellung einen Elektromotor 3a und einen Propeller 3b. Die Antriebseinheiten, insbesondere die Propeller 3b, sind gemäß der Ausgestaltung des Fluggeräts 1 in Figur 1 nicht schwenkbar. x, y und z bezeichnen ausgezeichnete Achsen des Fluggeräts 1; L, M und N die zugehörigen (Steuer-)Momente.

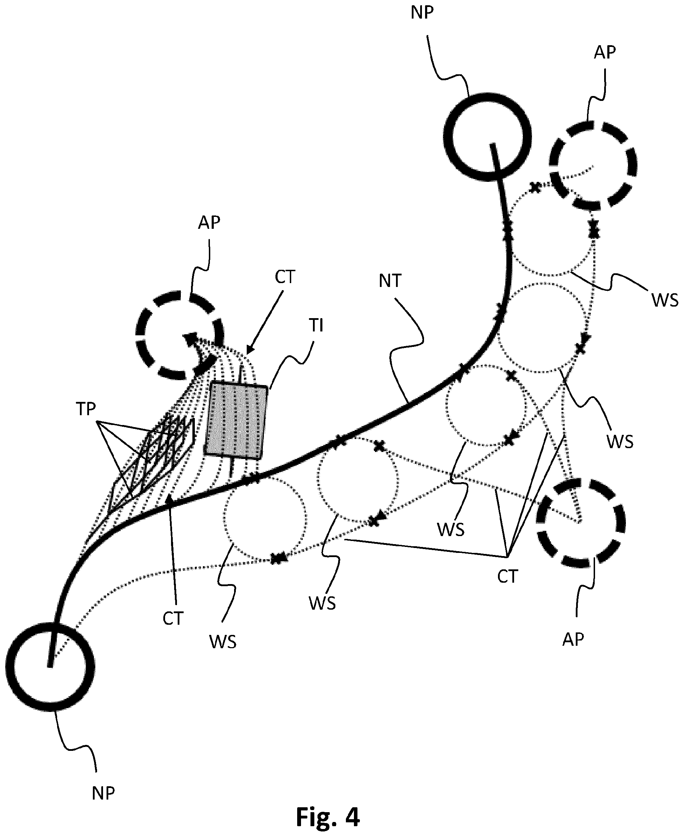

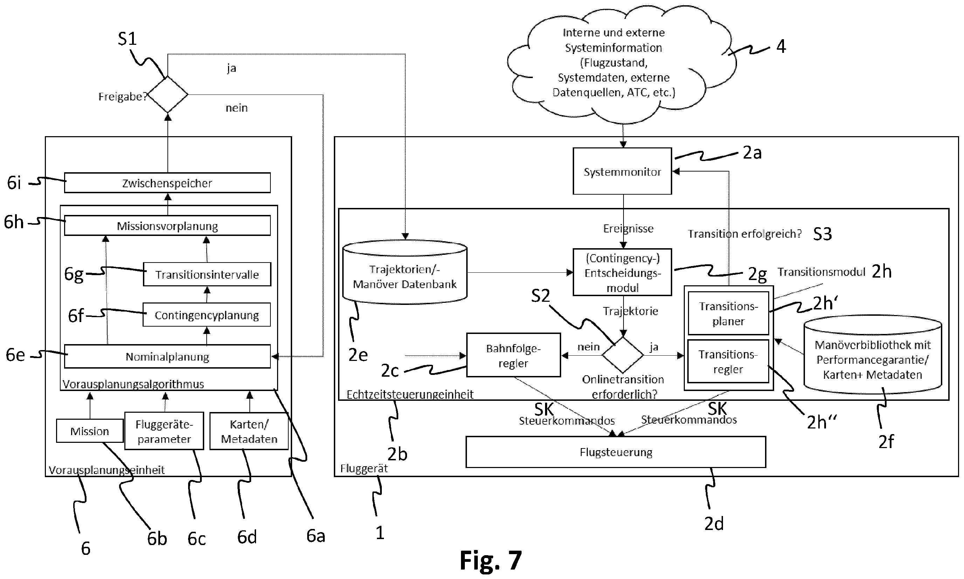

Das Fluggerät 1 weist bei Bezugszeichen 2 eine Flugsteuerungseinheit auf, die weiter unten anhand von Figur 7 noch genauer beschrieben wird. Die Flugsteuerungseinheit 2 umfasst neben einem Systemmonitor 2a bei Bezugszeichen 2b noch eine Echtzeitsteuerungseinheit, welche zur (teilweisen) Durchführung des erfindungsgemäßen Verfahrens ausgebildet ist, vorzugsweise programmtechnisch eingerichtet. Bezugszeichen 4 bezeichnet exemplarisch eine Sensoreinheit, die mit dem Systemmonitor 2a wirkverbunden ist; das Fluggerät 1 wird in der Regel eine Vielzahl solcher Sensoreinheiten 4 umfassen, die insbesondere dazu ausgebildet und geeignet sind, einen (Gesamt-)Zustand des Fluggeräts 1 (Systemzustand) und dessen Umgebung zu ermitteln. Bei Bezugszeichen 5 ist eine Piloteneingabeeinheit dargestellt, über die ein humaner Pilot (nicht gezeigt) seine Steueranforderungen an das Fluggerät 1 übermittelt, beispielsweise über einen Steuerknüppel oder dergleichen. Das Fluggerät ist im Rahmen der Erfindung jedoch insbesondere auch ohne humanen Piloten, d.h. mittels Autopilot oder dgl. flugfähig. Die Flugsteuerungseinrichtung 2 kann zur Bestimmung des Systemzustands auch ein physikalisches Modell des Fluggeräts 1 verwenden, was in Figur 4 nicht weiter dargestellt ist. Die Echtzeitsteuerungseinheit 2b wirkt mit der eigentlichen Flugsteuerung 2d zusammen oder kann diese umfassen (vgl. Figur 7), um das Fluggerät 1 durch geeignete Kommandierung der Antriebseinheiten 3 entlang einer vorausberechneten und in Echtzeit angepassten Flugbahn zu steuern, wie bereits ausführlich beschrieben wurde.

Vorzugsweise bestimmt die Flugsteuerungseinheit 2 mittels der Echtzeitsteuerungseinheit 2b die zu befliegende Trajektorie, wie vorstehend detailliert beschreiben, und steuert einen Bahnfolgeregler/die Flugsteuerung des Fluggeräts 1 (vgl. Figur 7) entsprechend an.

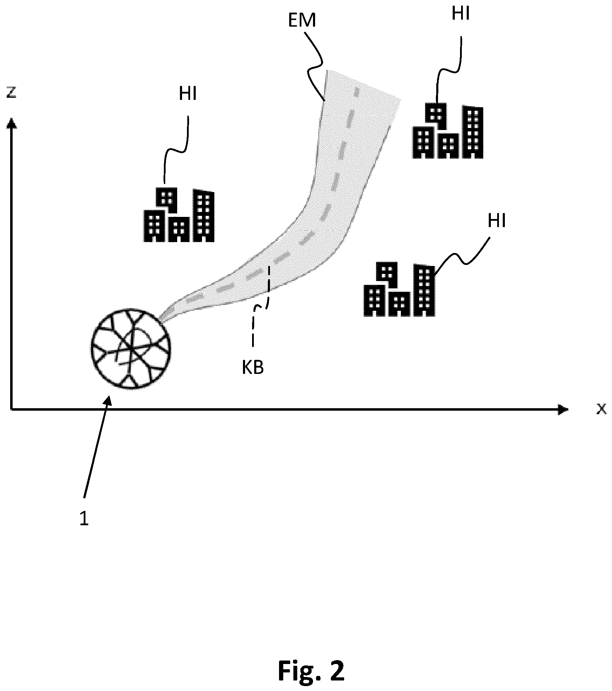

Figur 2 zeigt schematisch die erreichbare Menge EM von Flugbahnen für ein Fluggerät 1, z.B. gemäß Figur 1, in einer (Flug-)Ebene x-z, die Hindernisse HI enthält, insbesondere in einer urbanen Umgebung. Die erreichbare Menge EM beschreibt die durch den Extremfall begrenzte Menge der auftretenden Abweichungen von einer kommandierten Bahn KB des Fluggeräts 1. Dieser Extremfall berücksichtigt maximal mögliche Abweichungen insbesondere durch Wind(-Böen), Reglerabweichungen, Modellgüte, Messungenauigkeiten, etc. Die Bahnplanung berücksichtigt die erreichbare Menge EM, wie oben detailliert erläutert, und stellt somit sicher, dass auch im Extremfall keine Kollision mit Hindernissen HI stattfindet.

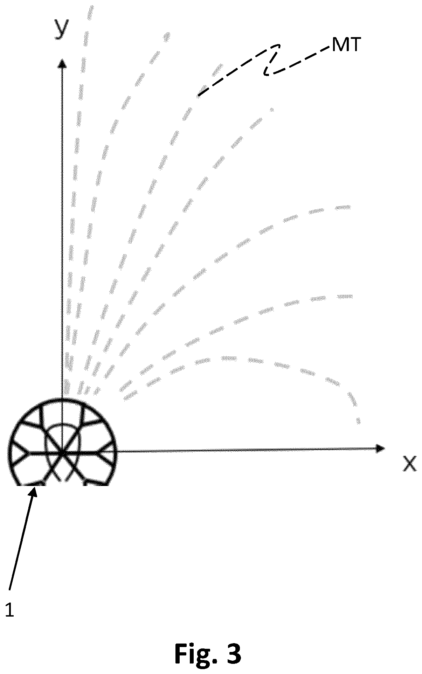

Figur 3 zeigt schematisch einen Inhalt der Manöverbibliothek, wie weiter oben im Detail erläutert. Für das Fluggerät 1 werden sogenannte Manöverbibliotheken berechnet. Diese bestehen aus vollständig vorberechneten und in der Datenbank vorgehaltenen Manövern, von denen in Figur 3 willkürlich eines bzw. die entsprechende Trajektorie in einer exemplarisch ausgewählten Ebene x-y mit dem Bezugszeichen MT bezeichnet ist. Bei der Berechnung dieser Manöver wird jeweils die Erreichbarkeitsmenge EM (vgl. Figur 2) berücksichtigt, wie weiter oben beschrieben. Anstelle einer Zustandsfolge, werden Manöver als ausführbare Regler in der (Manöver-)Bibliothek abgelegt. Diese Regler sind dahingehend optimiert, dass die durch die Ausführung eines Reglers unter Annahme begrenzter Störeinwirkung erreichbare Menge an Zuständen bzw. die mögliche Abweichung vom Zielzustand minimal wird. Die Information über diese erreichbare Menge wird dem Manöver/Regler als Attribut zugewiesen. Die Manöverbibliothek umfasst eine diskrete Repräsentation der Flugenvelope unter Berücksichtigung unterschiedlicher Performance-Zustände des Fluggeräts (z.B. Nominalzustand, Ausfallszenarien, Umgebungsbedingungen) und wird durch Ausnutzung von Symmetrien und Superposition speicheroptimiert.

Figur 4 zeigt eine grafische Darstellung einer Missionsplanung für ein Fluggerät mit nominalen Start- und Zielplätzen NP mit einer zugehörigen Nominaltrajektorie NT, welche die genannten Start- und Zielplätze NP verbindet. Außerdem gezeigt sind Notfall- oder Contingencytrajektorien CT zu Ausweichlandeplätzen AP, welche Contingencytrajektorien CT in Figur 4 nur zum Teil bezeichnet sind. Mehrere parametrisierte Warteschleifen WS mit Transitionspunkten ("x") auf Landetrajektorien sind ebenfalls ersichtlich. Solche Landetrajektorien können hier ebenfalls nominaler Natur sein. Ziel ist, dass parametrisierte Abschnitte auf Trajektorien zurückführen, welche auf einen Landeplatz führen. Dies kann sowohl die nominale Trajektorie als auch eine Notfalltrajektorie sein. Des Weiteren werden in der linken Bildhälfte potentielle Transitionspfade TP und ein flächig definiertes Transitionsintervall TI exemplarisch dargestellt. Die Transitionspfade TP ermöglichen einen Übergang zwischen verschiedenen Contingencytrajektorien CT. Auch innerhalb des Transitionsintervalls TI sind solche Übergänge (flexibel, nach Berechnung durch die Echtzeitsteuerungseinheit, vgl. Figur 1, 7) möglich.

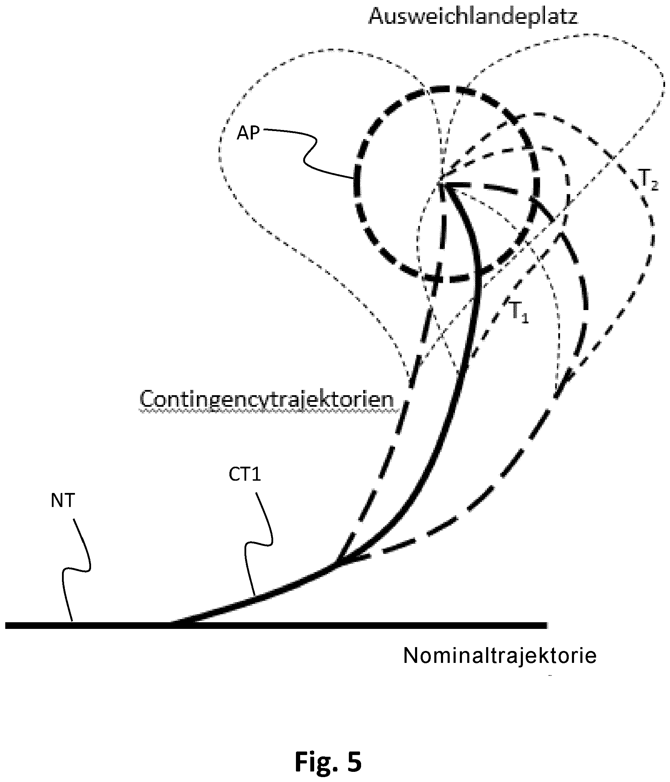

In Figur 5 sind verschachtelte Contingencytrajektorien, z.B. T₁, T₂, in einer Baumstruktur gezeigt, wobei von einer ersten Contingencytrajektorie CT1, die von der Nominaltrajektorie NT abzweigt, wieder weitere Contingencytrajektorien erster Ordnung (T₁) oder höherer Ordnung (T₂) abgehen. Die Nominaltrajektorie NT, vgl. Figur 4, ist unten als Gerade dargestellt.

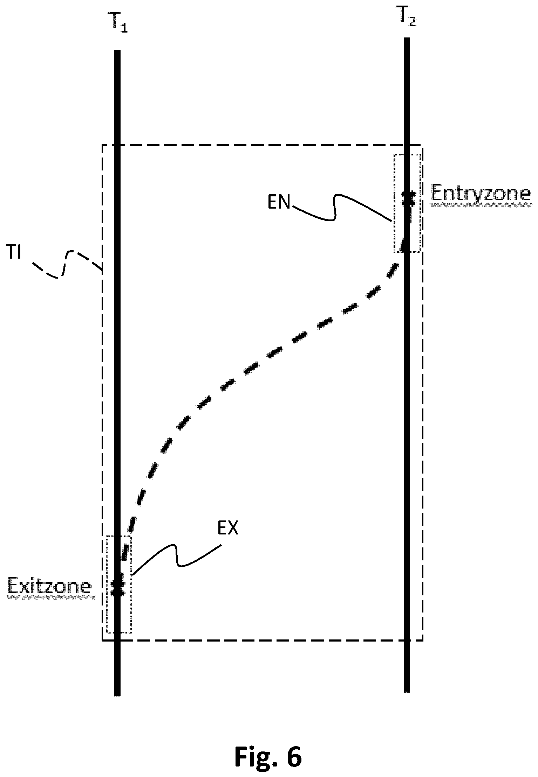

In Figur 6 ist gezeigt, wie eine in Echtzeit berechnete (Online-)Transition zwischen zwei vorberechneten Trajektorien T₁ und T₂ (vgl. z.B. Figur 4 oder 5) erfolgen kann. Die Transition startet in einer sog. vordefinierten Exitzone EX auf der Trajektorie T₁ und verläuft zu einer sog. Entryzone EN auf der Trajektorie T₂. Es wird algorithmisch durch die Echtzeitsteuerungseinheit (vgl. Figur 1, 7) sichergestellt, dass die Transition innerhalb der vorgegebenen Intervalle (TI, vgl. Figur 4) verläuft. Dieses Szenario ist nicht auf bestimmte Arten von Trajektorien T₁, T₂ (vgl. auch Figur 5) beschränkt.

Figur 7 zeigt ein Blockschaltbild des beschriebenen Bahnplanungsverfahrens mit Hardwareallokation. Der Detailgrad und Umfang der Vorausplanung ist dabei variabel, wie oben bereits detailliert erläutert.

Das Fluggerät 1 gemäß dem rechten Teil von Figur 7 umfasst neben dem bereits erwähnten Systemmonitor 2a, der mit den Sensoren und weiteren Informationsquellen (gemeinsam mit Bezugszeichen 4 bezeichnet; vgl. Figur 1) zum Bestimmen eines Zustands des Fluggeräts 1 und seiner Umgebung zusammenwirkt, die bereits erwähnte Echtzeitsteuerungseinheit 2b mit einem Bahnfolgeregler 2c. Bezugszeichen 2d bezeichnet die eigentliche Flugsteuerung, die auf die Antriebseinheiten des Fluggeräts 1 (vgl. Figur 1) einwirkt, um das Fluggerät in seiner Bewegung zu beeinflussen. Bezugszeichen 2e zeigt die bereits wiederholt erwähnte Datendank, in der die (vorausberechneten) Trajektorien und Manöver abgelegt sind. Bezugszeichen 2f steht für die Manöverbibliothek mit Performancegarantie und Karten- sowie Metadaten. Die Manöverbibliothek 2f und die Datenbank 2e können in einer gemeinsamen Speichereinheit abgespeichert sein. Außerdem zeigt Figur 7 auch noch ein (Notfall-)Entscheidungsmodul 2g in Wirkverbindung mit dem Systemmonitor 2a sowie ein Transitionsmodul 2h umfassend einen Transitionsplanungsalgorithmus (Translationsplaner) 2h` und einen Transitionsregler 2h" in Wirkverbindung zumindest mit der Manöverbibliothek 2f.

Der linke Teil von Figur 7 zeigt eine Vorausplanungseinheit 6, die bevorzugt auf einem bodengestützten Anwender-PC installiert ist bzw. ausgeführt wird. Das Ergebnis der Vorausplanung wird in der Datenbank 2e gespeichert, bevorzugt vor einem Flug des Fluggeräts 1. Die Vorausplanungseinheit 6 umfasst den eigentlichen Vorausplanungsalgorithmus 6a, der als Eingangsdaten Missionsdaten 6b, Fluggeräteparameter 6c und Karten-/Metadaten 6d empfängt. Der Vorausplanungsalgorithmus 6a umfasst Module für Nominalplanung 6e (Nominaltrajektorie/n), Contingencyplanung 6f (Notfalltrajektorien) und Planung der Transitionsintervalle 6g, aus deren Zusammenwirken in der gezeigten Abfolge sich die gesamte Missionsvorplanung 6h ergibt, die bevorzugt bei Bezugszeichen 6i in einem Zwischenspeicher zwischengespeichert wird.

Im Einsatz der Ausgestaltung gemäß Figur 7 ergibt sich folgender Ablauf: Nach erfolgter Vorausplanung (am Boden) findet bei Bezugszeichen S1 eine Abfrage dahingehend statt, ob die Missionsvorplanung 6h freigegeben wird oder nicht. Es ist vorzugsweise vorgesehen, dass ein sog. U-Space-Betreiber oder eine Flugsicherungsinstanz die Missionsplanung bewertet und freigibt. Falls ja, wird die Vorausplanung an das Fluggerät 1 übertragen und in der Datenbank 2e gespeichert. Fall nein, kehrt der Ablauf nach 6e (Nominalplanung) zurück.

Die Planungsdaten in der Datenbank 2e werden dann während des Flugs durch das Fluggerät 1 bzw. die Echtzeitsteuerungseinheit 2b verwendet. Sie stehen z.B. dem Bahnfolgeregler 2c und/oder dem Entscheidungsmodul 2g zur Verfügung, wobei letzteres auch Ereignisdaten ("Ereignisse") vom Systemmonitor 2a empfängt. "Ereignisse" steht hier für Ereignisse im Kontext ereignisbasierter Automaten. Ein Ereignis kann daher sein: "EPU xyz ausgefallen" oder "Rettungshubschrauber von links", etc.

Ausgabe des Entscheidungsmoduls 2g ist eine Trajektorie für das Fluggerät 1, die vorzugsweise gemäß den oben detailliert geschilderten Kriterien aus vorgeplanten Trajektorien und -Segmenten situationsbedingt ausgewählt wird. Diese Trajektorie wird bei S2 durch die Echtzeitsteuerungseinheit 2b darauf geprüft, ob (aufgrund der Ereignisdaten) eine sog. Onlinetransition erforderlich ist, d.h. ein in Echtzeit bestimmter Wechsel auf eine andere (Notfall-)Trajektorie und/oder Flugebene. Falls nein, übernimmt der Bahnfolgeregler 2c die weitere Steuerung des Fluggeräts 1 entlang der (ursprünglichen) Trajektorie (siehe die entsprechende Wirkverbindung zur Flugsteuerung 2d zur Übermittlung geeigneter Steuerkommandos SK). Falls ja, wird der Transitionsplaner 2h` des Transitionsmoduls 2h aktiv, der auf Grundlage der vorausberechneten Manöver etc. in der Manöverbibliothek 2f eine Trajektorienänderung (Transition) bestimmt und über den Transitionsregler 2h" des Transitionsmoduls 2h für eine entsprechend geänderte Steuerung des Fluggeräts 1 sorgt (siehe die entsprechende Wirkverbindung zur Flugsteuerung 2d zur Übermittlung geeigneter Steuerkommandos SK). Über den Systemmonitor 2a erfolgt eine Rückkopplung in Form einer Überprüfung (bei S3), ob die Transition erfolgreich war. Diskrete Wechsel der Flughöhe können bei Bedarf allein reglergestützt und ohne den Bedarf eines vorgeschalteten Planungsalgorithmus umgesetzt werden. Dies geschieht allein mittels des Transitionsreglers 2h" des Transitionsmoduls 2h.

## Patentansprüche

1. Verfahren zur Steuerung eines Fluggeräts (1) eines bestimmten Typs, insbesondere Multirotor-VTOL-Fluggerät mit vorzugsweise elektrisch angetriebenen Rotoren (3b), bei dem
a) vor einem Flug eine finite Anzahl an Nominaltrajektorien (NT) für das Fluggerät (1) und eine finite Anzahl an um die Nominaltrajektorien (NT) herum angeordneten Notfalltrajektorien (CT) berechnet und in einer an Bord des Fluggeräts (1) verfügbaren Datenbank (2e) abgespeichert werden;
b) vor einem Flug eine finite Anzahl an typspezifischen, zulässigen Flugmanövern des Fluggeräts (1) vorausgeplant und als Manöverbibliothek (2f) in der Datenbank abgespeichert werden;
c) optional vor einem Flug eine Anzahl diskreter Flugebenen mit unterschiedlichen Flughöhen definiert und in der Datenbank (2e) abgespeichert werden;
d) während eines Flugs innerhalb eines Echtzeitalgorithmus (2b) mittels eines rechnergestützten Transitionsplanungsalgorithmus (2h') auf die Datenbank (2e) zugegriffen wird, um in Anhängigkeit von einem durch Sensoren (4) erfassten Zustand des Fluggeräts (1) unter Verwendung der vorausgeplanten Flugmanöver zwischen den Nominaltrajektorien (NT) und den Notfalltrajektorien (CT) sowie optional zwischen den definierten Flugebenen zu wechseln und einen Bahnfolgeregler (2c) und/oder eine Flugsteuerung (2d) des Fluggeräts (1) entsprechend anzusteuern;
**dadurch gekennzeichnet, dass**
vor dem Flug zumindest für jede Nominaltrajektorie (NT) Transitionsintervalle sowie Entry- und Exit-Intervalle (TI, EN, EX) definiert werden und dass ein Wechsel zwischen Nominaltrajektorien und optional zwischen Flugebenen nur innerhalb dieser Transitionsintervalle sowie Entry- und Exit-Intervalle (TI, EN, EX) zulässig ist.

2. Verfahren nach Anspruch 1, bei dem die Notfalltrajektorien (CT) in einer Baumstruktur und/oder in regelmäßigen Abständen angeordnet sind, wobei vorzugsweise die Bahnplanung in Schritt a) mittels quasi-zufälliger Algorithmen zur Bahnplanung erfolgt, welcher Vorgang höchst vorzugsweise bis zu einem angestrebten Verzweigungsgrad auf den in einem vorherigen Schritt generierten Notfalltrajektorien (CT) wiederholt wird, sodass eine baumartige Flugbahnenstruktur entsteht.

3. Verfahren nach Anspruch 1 oder 2, bei dem in Schritt d) horizontale Transitionen zwischen unterschiedlichen Trajektorien vollständig von vertikalen Transitionen zwischen Flugebenen entkoppelt durchgeführt werden.

4. Verfahren nach einem der Ansprüche 1 bis 3, bei dem in Schritt a) sowohl eine Kombination einzelner Trajektorien als auch geschlossene Mengen erreichbarer Trajektorien berechnet werden, welche erreichbaren Trajektorien sich aus vorausgeplanten Trajektorien und Transitionsintervallen (TI) zwischen den vorausgeplanten Trajektorien ergeben.

5. Verfahren nach einem der Ansprüche 1 bis 4, bei dem Erreichbarkeitsmengen (EM) bestimmt werden auf Grundlage von wenigstens einem der folgenden:
i) Störeinwirkungen während des Nominalbetriebs, z.B. maximale Wind- und Böenstärke;
ii) bekannte Flugleistungsparameter, z.B. Dynamik und Kinematik, des Fluggeräts (1);
iii) einer Modellgüte in Form einer Abweichung zwischen einem zumindest dem Schritt a) zugrundeliegenden physikalischen Modell des Fluggeräts (1) und einem beobachteten oder gemessenen Flugverhalten;
bei dem vorzugsweise die Erreichbarkeitsmengen (EM) verwendet werden zur Vorausplanung der Flugmanöver in Schritt b).

6. Verfahren nach einem der Ansprüche 1 bis 5, bei dem in Schritt d) eine zeitschrittweise Echtzeitplanung der tatsächlichen Flugbahn entlang einer Nominaltrajektorie (NT) und innerhalb der Menge aller Notfalltrajektorien (CT) an Bord des Fluggerätes (1) erfolgt, einschließlich:
i) Update eines Systemzustands des Fluggeräts (1);
ii) daraus abgeleitet, Update der zu befliegenden Trajektorie und Flugebene;
iii) Update einer ausgewählten Bahn aus dem vorherigen Zeitschritt unter Berücksichtigung einer Bewertungsfunktion und bei Bedarf Transition auf eine neue Bahn, insbesondere durch eine modelbasierte Planungsmethode mit beschränktem Zeithorizont.

7. Verfahren nach einem der Ansprüche 1 bis 6, bei dem die Manöverbibliothek (2f) eine diskrete Repräsentation einer Flugenvelope des Fluggeräts (1) unter Berücksichtigung unterschiedlicher Performance-Zustände des Fluggeräts (1), wie Nominalzustand, Ausfallszenarien oder Umgebungsbedingungen, beinhaltet und vorzugsweise durch Ausnutzung von Symmetrien und Superposition speicheroptimiert abgespeichert wird, wobei die Manöverbibliothek (2f) höchst vorzugsweise auf einen gegebenen Fluggerätetyp zugeschnitten ist.

8. Verfahren nach einem der Ansprüche 1 bis 7, bei dem zusätzlich parametrisierte Trajektoriensegmente definiert und in der Datenbank (2e) abgespeichert werden, worunter lokal ausführbare Flugbahnen oder Teil-Flugbahnen verstanden werden, die keinen Wechsel einer ausgewählten Trajektorie nach sich ziehen, sondern nach ihrer Beendigung auf diese Trajektorie zurückführen, zum Bespiel Warteschleifen, zeitlich begrenzte Änderungen der Geschwindigkeit entlang der Flugbahn oder Steig- und Sinkflüge zum Wechseln der Flugebene.

9. Verfahren nach einem der Ansprüche 1 bis 8, bei dem ein Wechsel der Flugebene und/oder Trajektorie an einem nächstgelegenen Verzweigungspunkt der Baumstruktur gemäß Anspruch 2 oder mittels des Transitionsplanungsalgorithmus (2h') im nächstgelegenen Entry-/Exit-Intervall erfolgt, falls kein Übergang entlang der Baumstruktur möglich ist.

10. Rechnergestütztes System zur Steuerung eines Fluggeräts (1) eines bestimmten Typs nach dem Verfahren gemäß einem der Ansprüche 1 bis 9, insbesondere eines Multirotor-VTOL-Fluggeräts mit vorzugsweise elektrisch angetriebenen Rotoren (3b), mit wenigstens einer Rechnereinheit, die als bodengestützte Rechnereinheit und/oder als Bord-Rechnereinheit des Fluggeräts (1) ausgebildet ist, bei dem die Rechnereinheit ausgebildet und eingerichtet ist zum:
A) Ausführen eines Vorplanungsalgorithmus zum Durchführen von Verfahrensschritt a);
B) Bereitstellen der Datenbank (2e);
C) Ausführen eines Echtzeitalgorithmus (2b), der ein Entscheidungsmodul bereitstellt, dessen Eingang der Zustand des Fluggeräts (1) gemäß Verfahrensschritt d) und dessen Ausgang eine dem aktuellen Zustand des Fluggeräts (1) am besten entsprechende Trajektorie aus der finiten Anzahl von Nominal- (NT) und Notfalltrajektorien (CT) entsprechend einer Bewertungsmetrik ist;
D) Ausführen des Transitionsplanungsalgorithmus (2h') gemäß Verfahrensschritt d);
**dadurch gekennzeichnet, dass**
der Transitionsplanungsalgorithmus (2h') zum Veranlassen eines Wechsels zwischen Nominaltrajektorien, (NT) nur innerhalb der Transitionsintervalle (TI) sowie innerhalb der Exit- und Entry-Intervalle (EX, EN) ausgebildet ist.

11. System nach Anspruch 10, bei dem der Vorplanungsalgorithmus (6a) aufweist: Eingänge für Kartendaten (6d) in Form verbreiteter Kartenformate sowie für Start- und Zielkoordinaten, für deren Eingabe vorzugsweise eine Text-Datei oder eine Benutzeroberfläche vorgesehen ist, und Ausgänge für georeferenzierte, parametrisierte oder nicht-parametrisierte Trajektorien mit Exit- und Entry-Intervallen (EX, EN), vorzugsweise in Tabellenform, sowie für parametrisierte Trajektoriensegmente für Flugebenenwechsel, Warteschleifen, etc., die an die Datenbank (2e) übertragbar und/oder in der Datenbank (2e) speicherbar sind.

12. System nach Anspruch 10 oder 11, bei dem der Transitionsplanungsalgorithmus (2h') aufweist: Eingänge für einen Zustandsvektor aus einer Zustandsschätzung des Fluggeräts (1), vorzugsweise in Form einer Sensordatenfusion aus unterschiedlichen Sensoren (4), für Exit- und Entry-Intervalle (EX, EN) aus der Datenbank (2e), für Start- und Zielzustände aus der Datenbank (2e), für die Manöverbibliothek (2f), für eine Zieltrajektorie und Ziel-Flugebene sowie für eine Manöverpriorisierung aus der Datenbank (2e), und einen Ausgang für einen Bahnvektor (p, *p, p̈*, 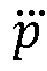 , *ψ*, *ψ̇*, *ψ̈*) zur Ausgabe an einen Positionsregler des Fluggeräts (1) mit der Postitionsvorgabe p und deren zeitlichen Ableitungen sowie dem Gierwinkel ψ und dessen zeitlichen Ableitungen.

13. System nach einem der Ansprüche 10 bis 12, bei dem der Echtzeitalgorithmus (2b) dazu ausgebildet ist, zu jedem Zeitschritt zwischen einer endlichen Anzahl diskreter Trajektorien, die jeweils mit der nominalen Trajektorie (NT), einer Notfalltrajektorie (CT) oder einem temporär auszuführenden Trajektoriensegment korrespondiert, auszuwählen.

14. Fluggerät (1), insbesondere Multirotor-VTOL-Fluggerät mit vorzugsweise elektrisch angetriebenen Rotoren (3b), mit einem System gemäß einem der Ansprüche 10 bis 13.

## Claims

1. Method for controlling an aircraft (1) of a specific type, especially a multirotor VTOL aircraft having preferably electrically driven rotors (3b), wherein
a) prior to a flight, a finite number of nominal trajectories (NT) for the aircraft (1) and a finite number of contingency trajectories (CT) arranged around the nominal trajectories (NT) are calculated and stored in a database (2e) available on board the aircraft (1);
b) prior to a flight, a finite number of type-specific, permissible flight manoeuvres of the aircraft (1) are pre-planned and stored in the database as a manoeuvre library (2f);
c) optionally, prior to a flight, a number of discrete flight levels at different altitudes are defined and stored in the database (2e);
d) during a flight, the database (2e) is accessed by means of a computer-aided transition planning algorithm (2h') within a real-time algorithm (2b) in order, in dependence upon a state of the aircraft (1) detected by sensors (4), to change between the nominal trajectories (NT) and the contingency trajectories (CT) and optionally between the defined flight levels using the pre-planned flight manoeuvres and to actuate a path-tracking controller (2c) and/or a flight controller (2d) of the aircraft (1) accordingly;
**characterised in that**
prior to the flight, transition intervals and entry and exit intervals (TI, EN, EX) are defined at least for each nominal trajectory (NT); and a change between nominal trajectories and optionally between flight levels is permissible only within those transition intervals and entry and exit intervals (TI, EN, EX).

2. Method according to claim 1, wherein the contingency trajectories (CT) are arranged in a tree structure and/or at regular spacings, wherein preferably the path planning in step a) is effected by means of quasi-random algorithms for path planning, which operation is most preferably repeated up to a desired degree of branching on the contingency trajectories (CT) generated in a previous step, so that a tree-like flightpath structure is created.

3. Method according to claim 1 or 2, wherein in step d) horizontal transitions between different trajectories are performed fully decoupled from vertical transitions between flight levels.

4. Method according to any one of claims 1 to 3, wherein in step a) both a combination of individual trajectories and closed sets of reachable trajectories are calculated, which reachable trajectories result from pre-planned trajectories and transition intervals (Tl) between the pre-planned trajectories.

5. Method according to any one of claims 1 to 4, wherein reachability sets (EM) are determined on the basis of at least one of the following:
i) disruptive effects during normal operation, for example maximum wind and gust strength;
ii) known flight performance parameters, for example dynamics and kinematics, of the aircraft (1);
iii) a model quality in the form of a variance between a physical model of the aircraft (1) on which at least step a) is based and an observed or measured flight behaviour;
wherein preferably the reachability sets (EM) are used for pre-planning the flight manoeuvres in step b).

6. Method according to any one of claims 1 to 5, wherein in step d) timestep-by-timestep real-time planning of the actual flightpath along a nominal trajectory (NT) and within the set of all contingency trajectories (CT) is effected on board the aircraft (1), including:
i) updating of a system state of the aircraft (1);
ii) derived therefrom, updating of the trajectory and flight level to be flown;
iii) updating of a selected path from the previous timestep, taking account of an evaluation function, and, if required, transition to a new path, especially by a model-based planning method with a limited time horizon.

7. Method according to any one of claims 1 to 6, wherein the manoeuvre library (2f) contains a discrete representation of a flight envelope of the aircraft (1) taking account of different performance states of the aircraft (1), such as nominal state, failure scenarios or environmental conditions, and is preferably stored in memory-optimised manner by utilising symmetries and superposition, the manoeuvre library (2f) most preferably being tailored to a given aircraft type.

8. Method according to any one of claims 1 to 7, wherein additionally parameterised trajectory segments are defined and stored in the database (2e), which trajectory segments are understood as being locally performable flightpaths or part-flightpaths which do not entail a change of a selected trajectory but, once completed, return to that trajectory, for example holding patterns, time-limited alterations in speed along the flightpath or ascents or descents for changing the flight level.

9. Method according to any one of claims 1 to 8, wherein a change of the flight level and/or trajectory is effected at a nearest branching point of the tree structure according to claim 2 or by means of the transition planning algorithm (2h') in the nearest entry/exit interval if transit along the tree structure is not possible.

10. Computer-aided system for controlling an aircraft (1) of a specific type in accordance with the method according to any one of claims 1 to 9, especially a multirotor VTOL aircraft having preferably electrically driven rotors (3b), having at least one computer unit which is configured as a ground-based computer unit and/or as an onboard computer unit of the aircraft (1), wherein the computer unit is configured and equipped for:
A) execution of a pre-planning algorithm for carrying out method step a);
B) provision of the database (2e);
C) execution of a real-time algorithm (2b) which provides a decision module, the input of which is the state of the aircraft (1) according to method step d) and the output of which is a trajectory from the finite number of nominal (NT) and contingency (CT) trajectories which, according to a evaluation metric, best corresponds to the current state of the aircraft (1);
D) execution of a transition planning algorithm (2h') according to method step d);
**characterised in that**
the transition planning algorithm (2h') is configured to bring about a change between nominal trajectories (NT) only within the transition intervals (Tl) and within the exit and entry intervals (EX, EN).

11. System according to claim 10, wherein the pre-planning algorithm (6a) has: inputs for map data (6d) in the form of widely used map formats as well as for start and target co-ordinates, for the input of which preferably a text file or a user interface is provided, and outputs for geo-referenced, parameterised or non-parameterised trajectories with exit and entry intervals (EX, EN), preferably in tabular form, as well as for parameterised trajectory segments for flight level changes, holding patterns, etc., which are transferrable to the database (2e) and/or storable in the database (2e).

12. System according to claim 10 or 11, wherein the transition planning algorithm (2h') has: inputs for a state vector from a state estimate of the aircraft (1), preferably in the form of a sensor data fusion from different sensors (4), for exit and entry intervals (EX, EN) from the database (2e), for start and target states from the databank (2e), for the manoeuvre library (2f), for a target trajectory and target flight level as well as for a manoeuvre prioritisation from the database (2e), and an output for a path vector (*ρ*, *p, ρ̈*, 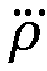 , *ψ*, *ψ̇*, *ψ̈*) for outputting to a position controller of the aircraft (1) with the position specification *ρ* and its time derivatives as well as with the yaw angle *ψ* and its time derivatives.

13. System according to any one of claims 10 to 12, wherein the real-time algorithm (2b) is configured to select, at each timestep, between a finite number of discrete trajectories which in each case corresponds to the nominal trajectory (NT), to a contingency trajectory (CT) or to a trajectory segment to be performed temporarily.

14. Aircraft (1), especially a multirotor VTOL aircraft, having preferably electrically driven rotors (3b), having a system according to any one of claims 10 to 13.

## Revendications

1. Procédé pour commander un aéronef (1) d'un type déterminé, en particulier un aéronef VTOL à rotors multiples comprenant des rotors (3b) entraînés de préférence électriquement, dans lequel
a) un nombre fini de trajectoires nominales (NT) pour l'aéronef (1) et un nombre fini de trajectoires d'urgence (CT) disposées tout autour des trajectoires nominales (NT) sont calculées avant un vol et sont sauvegardées dans une base de données (2e) disponible à bord de l'aéronef (1) ;
b) un nombre fini de manoeuvres de vol de l'aéronef (1) autorisées spécifiques au type sont planifiées au préalable avant un vol et sont sauvegardées dans la base de données en tant que bibliothèque de manoeuvres (2f) ;
c) en option un nombre de plans de vol discrets comprenant différentes altitudes de vol sont définis avant un vol et sont sauvegardés dans la base de données (2e) ;
d) la base de données (2e) est consultée pendant un vol dans un algorithme en temps réel (2b) au moyen d'un algorithme de planification de transition (2h') assisté par ordinateur pour passer entre les trajectoires nominales (NT) et les trajectoires d'urgence (CT) ainsi qu'en option entre les plans de vol définis en fonction d'un état de l'aéronef (1) détecté par des capteurs (4) en utilisant les manoeuvres de vol planifiées au préalable et pour piloter de manière correspondante un régulateur de séquence de trajectoires (2c) et/ou une commande de vol (2d) de l'aéronef (1) ;
**caractérisé en ce que**
des intervalles de transition ainsi que des intervalles d'entrée et de sortie (TI, EN, EX) sont définis au moins pour chaque trajectoire nominale (NT) avant le vol, et un passage entre des trajectoires nominales et en option entre des plans de vol est autorisé seulement dans lesdits intervalles de transition ainsi que dans les intervalles d'entrée et de sortie (TI, EN, EX).

2. Procédé selon la revendication 1, dans lequel les trajectoires d'urgence (CT) sont disposées dans une arborescence et/ou à des espacements réguliers, la planification de trajectoire ayant lieu de préférence dans l'étape a) au moyen d'algorithmes de planification de trajectoires quasi aléatoires, ladite opération étant répétée au maximum de préférence jusqu'à un degré de ramification visé sur les trajectoires d'urgence (CT) générées dans une étape précédente si bien qu'une structure de trajectoire de vol de type arborescence est créée.

3. Procédé selon la revendication 1 ou 2, dans lequel des transitions horizontales entre différentes trajectoires sont mises en œuvre de manière totalement découplée de transitions verticales entre des plans de vol dans l'étape d).

4. Procédé selon l'une des revendications 1 à 3, dans lequel à la fois une combinaison de trajectoires isolées et des quantités fermées de trajectoires accessibles sont calculées à l'étape a), lesquelles trajectoires accessibles résultent de trajectoires planifiées au préalable et d'intervalles de transition (TI) entre les trajectoires planifiées au préalable.

5. Procédé selon l'une des revendications 1 à 4, dans lequel des quantités d'accessibilité (EM) sont déterminées sur la base d'au moins un des éléments suivants :
i) des effets de perturbations pendant le fonctionnement nominal, par exemple intensité de vent et de rafale maximale ;
ii) des paramètres de puissance de vol connus, par exemple la dynamique et la cinématique de l'aéronef (1) ;
iii) une pertinence de modèle sous la forme d'un écart entre un modèle physique sous-jacent au moins à l'étape a) de l'aéronef (1) et un comportement de vol observé ou mesuré ; dans lequel de préférence les quantités d'accessibilité (EM) sont utilisées pour planifier au préalable les manoeuvres de vol dans l'étape b).

6. Procédé selon l'une des revendications 1 à 5, dans lequel à l'étape d) une planification en temps réel par intervalle de temps de la trajectoire de vol réelle a lieu le long d'une trajectoire nominale (NT) et dans la quantité de toutes les trajectoires d'urgence (CT) à bord de l'aéronef (1), y compris :
i) la mise à jour d'un état de système de l'aéronef (1) ;
ii) par extension, la mise à jour de la trajectoire et du plan de vol à parcourir ;
iii) la mise à jour d'une trajectoire sélectionnée à partir de l'intervalle de temps précédent en tenant compte d'une fonction d'évaluation et, si besoin, la transition sur une nouvelle trajectoire, en particulier par une méthode de planification se basant sur un modèle avec un horizon temporel restreint.

7. Procédé selon l'une des revendications 1 à 6, dans lequel la bibliothèque de manoeuvres (2f) renferme une représentation discrète d'un domaine de vol de l'aéronef (1) en tenant compte de différents états de performance de l'aéronef (1) comme l'état nominal, des scénarii de défaillance ou des conditions extérieures et est sauvegardée de manière optimisée en mémoire de préférence par utilisation de symétrisation et de superposition, la bibliothèque de manoeuvres (2f) étant au maximum taillée sur mesure de préférence sur un type d'aéronef donné.

8. Procédé selon l'une des revendications 1 à 7, dans lequel en supplément des segments de trajectoire paramétrés sont définis et sont sauvegardés dans la base de données (2e), par lesquels on entend des trajectoires de vol ou des trajectoires de vol partielles exécutables localement, qui ne se traduisent pas par un changement d'une trajectoire sélectionnée mais par le recours à ladite trajectoire après la fin de celle-ci, par exemple files d'attente, des modifications limitées dans le temps de la vitesse le long de la trajectoire de vol ou des montées et descentes pour changer le plan de vol.

9. Procédé selon l'une des revendications 1 à 8, dans lequel un changement du plan de vol et/ou de la trajectoire a lieu sur un point de ramification le plus proche de l'arborescence selon la revendication 2 ou au moyen de l'algorithme de planification de transition (2h') dans l'intervalle d'entrée/de sortie qui suit directement après si aucun passage le long de l'arborescence n'est possible.

10. Système assisté par ordinateur pour commander un aéronef (1) d'un type déterminé selon le procédé selon l'une des revendications 1 à 9, en particulier d'un aéronef VTOL à rotors multiples comprenant des rotors (3b) entraînés de préférence électriquement, comprenant au moins une unité de calcul qui est réalisée en tant qu'unité de calcul basée au sol et/ou en tant qu'unité de calcul embarquée de l'aéronef (1), dans lequel l'unité de calcul est réalisée et est mise au point pour :
A) exécuter un algorithme de planification préalable pour mettre en œuvre l'étape de procédé a) ;
B) fournir la base de données (2e) ;
C) exécuter un algorithme en temps réel (2b) qui fournit un module de décision dont l'entrée est l'état de l'aéronef (1) selon l'étape de procédé d) et dont la sortie est une trajectoire correspondant le mieux à l'état du moment de l'aéronef (1) issue du nombre fini de trajectoires nominales (NT) et de trajectoires d'urgence (CT) conformément à une métrique d'évaluation ;
D) exécuter l'algorithme de planification de transition (2h') selon l'étape de procédé d) ; **caractérisé en ce que**
l'algorithme de planification de transition (2h') est réalisé pour déclencher un passage entre des trajectoires nominales (NT) seulement dans les intervalles de transition (TI) ainsi que dans les intervalles de sortie et d'entrée (EX, EN).

11. Système selon la revendication 10, dans lequel l'algorithme de planification préalable (6a) présente : des entrées pour des données de carte (6d) sous la forme de formats de carte élargis ainsi que pour des coordonnées de départ et de destination, pour la saisie desquelles un fichier de texte ou une surface d'utilisateur sont prévus de préférence, et des sorties pour des trajectoires géoréférencées, paramétrées ou non paramétrées avec des intervalles de sortie et d'entrée (EX, EN), de préférence sous la forme de tableaux, ainsi que pour des segments de trajectoire paramétrés pour des changements de plans de vol, des files d'attente, etc., qui peuvent être transmis à la base de données (2e) et/ou peuvent être mémorisés dans la base de données (2e) .

12. Système selon la revendication 10 ou 11, dans lequel l'algorithme de planification de transition (2h') présente : des entrées pour un vecteur d'état issu d'une évaluation d'état de l'aéronef (1), de préférence sous la forme d'une fusion de données de capteur issue de différents capteurs (4), pour des intervalles de sortie et d'entrée (EX, EN) issus de la base de données (2e), pour des états de départ et cible issus de la base de données (2e), pour la bibliothèque de manoeuvres (2f), pour une trajectoire cible et un plan de vol cible ainsi que pour une priorisation de manoeuvres issues de la base de données (2e), et une sortie pour un vecteur de traj ectoire (*p*, *ṗ*, *p̈*, 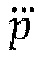 , *ψ*, *ψ̇*, *ψ̈*) à envoyer à un régulateur de position de l'aéronef (1) avec la spécification de position p et ses dérivées temporelles ainsi qu'avec l'angle d'embardée *ψ* et ses dérivées temporelles.

13. Système selon l'une des revendications 10 à 12, dans lequel l'algorithme en temps réel (2b) est réalisé pour sélectionner pour chaque intervalle de temps entre un nombre définitif de trajectoires discrètes qui correspond respectivement à la trajectoire nominale (NT), à une trajectoire d'urgence (CT) ou à un segment de trajectoire à exécuter temporairement.

14. Aéronef (1), en particulier aéronef VTOL à rotors multiples, comprenant des rotors (3b) entraînés de préférence électriquement, comprenant un système selon l'une des revendications 10 à 13.
